(19) 

Europäisches
Patentamt
European
Patent Office
Office européen
des brevets

(11) **EP 4 668 991 A1**

(12) **EUROPEAN PATENT APPLICATION**
published in accordance with Art. 153(4) EPC

(43) Date of publication:
**24.12.2025 Bulletin 2025/52**

(21) Application number: **23942918.6**

(22) Date of filing: **29.06.2023**

(51) International Patent Classification (IPC):
*H04W 72/40* (2023.01)

(52) Cooperative Patent Classification (CPC):
Y02D 30/70

(86) International application number:
**PCT/CN2023/104306**

(87) International publication number:
**WO 2025/000410 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Guangdong OPPO Mobile
Telecommunications
Corp., Ltd.
Wusha, Chang'an, Dongguan 523860 (CN)**

(72) Inventor: **The designation of the inventor has not
yet been filed**

(74) Representative: **Novagraaf Technologies
Bâtiment O2
2, rue Sarah Bernhardt
CS90017
92665 Asnières-sur-Seine Cedex (FR)**

(54) **SIDELINK COMMUNICATION METHOD AND TERMINAL**

(57) The present application relates to a sidelink communication method and a terminal. The method comprises: a first terminal sends first information after accessing a channel by means of listen-before-talk (LBT), the first information being used for indicating channel occupancy time (COT) shared information. In embodiments of the present application, the use efficiency of COT and the resource utilization rate in a sidelink communication system can be improved.

800 — S810

Transmitting, by a first terminal, first information upon accessing a channel via an LBT procedure, wherein the first information is used to indicate COT sharing information

FIG. 8

EP 4 668 991 A1

## Description

### TECHNICAL FIELD

Embodiments of the present disclosure relate to the technical field of communications, and in particular, relate to methods and terminals for sidelink (SL) communication.

### RELATED ART

In an unlicensed spectrum, a communication device needs to perform a listen-before-talk (LBT) procedure prior to transmitting signals. The communication device needs to perform channel monitoring prior to transmitting the signals on a channel of the unlicensed spectrum, and may transmit the signals in response to an idle status of the channel. Upon successfully accessing the channel via the LBT procedure, a time for channel occupancy is referred to as a channel occupancy time (COT).

### SUMMARY

Embodiments of the present disclosure provide methods and terminals for SL communication, which can improve an utilization efficiency of the COT and a resource utilization rate in an SL communication system.

Some embodiments of the present disclosure provide a method for SL communication. The method is performed by a first terminal, and includes:
transmitting first information upon accessing a channel via an LBT procedure, wherein the first information is used to indicate COT sharing information.

Some embodiments of the present disclosure provide a method for SL communication. The method is performed by a second terminal, and includes:

receiving first information, wherein the first information is used to indicate COT information; and
performing channel access based on the COT information acquired from the first information.

Some embodiments of the present disclosure provide a first SL communication device. The first SL communication device includes:
a transmitting unit, configured to transmit first information upon accessing a channel via an LBT procedure, wherein the first information is used to indicate COT sharing information.

Some embodiments of the present disclosure provide a second SL communication device. The second SL communication device includes:

a receiving unit, configured to receive first information, wherein the first information is used to indicate COT information; and
a processing unit, configured to perform channel access based on the COT information acquired from the first information.

Some embodiments of the present disclosure provide a terminal device. The terminal device includes a processor and a memory, wherein the memory is configured to store one or more computer programs, and the processor is configured to call and run the one or more computer programs in the memory to cause the communication device to perform the method for SL communication described above.

Some embodiments of the present disclosure provide a chip to perform the method for SL communication.

Specifically, the chip includes a processor, wherein the processor is configured to call and run one or more computer programs in a memory to cause a device equipped with the chip to perform the method for SL communication described above.

Some embodiments of the present disclosure provide a computer-readable storage medium. The computer-readable storage medium stores one or more computer programs, wherein the one or more computer programs, when loaded and run on a device, cause the device to perform the method for SL communication described above.

Some embodiments of the present disclosure provide a computer program product. The computer program product includes one or more computer program instructions, wherein the one or more computer program instructions, when loaded and executed on a computer, cause the computer to perform the method for SL communication described above.

Some embodiments of the present disclosure provide a computer program. The computer program, when loaded and run on a computer, causes the computer to perform the method for SL communication described above.

In the embodiments of the present disclosure, the COT is shared based on the sequence, such that the utilization efficiency of the COT and the resource utilization rate in the SL communication system are improved.

## BRIEF DESCRIPTION OF DRAWINGS

FIG. 1 is a schematic diagram of an application scenario according to some embodiments of the present disclosure;
FIG. 2 is a schematic flowchart of a type-1 LBT procedure according to some embodiments of the present disclosure;
FIG. 3 is an exemplary diagram of COT sharing on a station according to some embodiments of the present disclosure;
FIG. 4 is a schematic diagram of configuration of guard bands for resource block (RB) sets according to some embodiments of the present disclosure;
FIG. 5A is a schematic diagram of mode A in the 3rd Generation Partnership Project (3GPP) according to some embodiments of the present disclosure;
FIG. 5B is a schematic diagram of mode B in the 3GPP according to some embodiments of the present disclosure;
FIG. 6 is a schematic diagram of a discontinuous reception (DRX) cycle according to some embodiments of the present disclosure;
FIG. 7 is a schematic diagram of control of a DRX by a power saving wake-up signal according to some embodiments of the present disclosure;
FIG. 8 is a schematic flowchart of a method for SL communication according to some embodiments of the present disclosure;
FIG. 9 is a schematic flowchart of a method for SL communication according to some embodiments of the present disclosure;
FIG. 10 is a schematic flowchart of a method for SL communication according to some embodiments of the present disclosure;
FIG. 11 is a schematic diagram of COT sharing from user equipment (UE) 1 to UE 2 according to some embodiments of the present disclosure;
FIG. 12 is a schematic block diagram of a first device according to some embodiments of the present disclosure;
FIG. 13 is a schematic block diagram of a second device according to some embodiments of the present disclosure;
FIG. 14 is a schematic block diagram of a communication device according to some embodiments of the present disclosure;
FIG. 15 is a schematic block diagram of a chip according to some embodiments of the present disclosure; and
FIG. 16 is a schematic block diagram of a communication system according to some embodiments of the present disclosure.

## DETAILED DESCRIPTION

The technical solutions according to the embodiments of the present disclosure are described hereinafter in combination with the accompanying drawings for the embodiments of the present disclosure.
The technical solutions according to the embodiments of the present disclosure are applicable to various communication systems, such as a global system of mobile communication (GSM), a code-division multiple access (CDMA) system, a wideband code-division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, an universal mobile telecommunication system (UMTS), a wireless local area network (WLAN), a wireless fidelity (Wi-Fi), a 5th generation (5G) communication system, or other communication systems.
In general, the traditional communication systems support a limited number of connections and is relatively easy to implement. However, with the development of the communication technologies, the mobile communication systems not only support traditional communications, but also support, for example, device-to-device (D2D) communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems.
In some embodiments, the communication systems according to the embodiments of the present disclosure are also applicable to a carrier aggregation (CA) scenario, a dual connectivity (DC) scenario, or a standalone (SA) scenario networking scenario.
In some embodiments, the communication systems according to the embodiments of the present disclosure are also applicable to an unlicensed spectrum. The unlicensed spectrum may also be considered as a shared spectrum.

Alternatively, the communication systems according to the embodiments of the present disclosure are also applicable to a licensed spectrum. The licensed spectrum may also be considered as a non-shared spectrum.

Various embodiments are described in conjunction with a network device and a terminal device in the embodiments of the present disclosure. The terminal device is also referred to as a UE, an access terminal, a subscriber unit, a subscriber station, a rover station, a mobile station, a remote station, a remote terminal, a mobile device, a user terminal, a terminal, a wireless communication device, a user agent, a user apparatus, or the like.

The terminal device may be a station (ST) in the WLAN, for example, a cellular phone, a cordless phone, a Session Initiation Protocol (SIP) phone, a wireless local loop (WLL) ST, a personal digital assistant (PDA) device, a handheld device with a wireless communication capability, a computing device or other processing devices connected to a wireless modem, an in-vehicle device, a wearable device, a terminal device in a next generation communication system (such as the NR network), a terminal device in an evolved public land mobile network (PLMN), or the like.

In the embodiments of the present disclosure, the terminal device is deployed on land (for example, indoors or outdoors, or handheld, wearable, or in-vehicle deployment); or the terminal device may be deployed on water (for example, on a ship); or the terminal device may be deployed in air (for example, on an aircraft, a balloon, or a satellite).

In the embodiments of the present disclosure, the terminal device is a mobile phone, a pad, a computer with a radio transceiver function, a virtual reality (VR) terminal device, an augmented reality (AR) terminal device, a wireless terminal device in industrial control, a wireless terminal device in self-driving, a wireless terminal device in remote medical, a wireless terminal in smart grid, a wireless terminal in transportation safety, a wireless terminal in smart city, or a wireless terminal device in smart home.

By way of example by not limitation, in the embodiments of the present disclosure, the terminal device may be a wearable device. The wearable device may also be referred to as a wearable smart device, which is a generic name for wearable devices such as glasses, gloves, watches, clothes, and shoes that are developed by applying wearable technologies for smart designs of daily wearables. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a full-functionality and large-size device capable of implementing all or part of functions without relying on a smart phone, for example, a smart watch or smart glasses; and includes a device specializing in specific application functions and needs to be used with another device such as a smart phone, for example, various smart bracelets or smart jewelry for vital sign monitoring.

In the embodiments of the present disclosure, the network device is a device for communicating with the mobile device, and the network device is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, or a network device in an NR network (gNB), in cellular Internet of things, in cellular passive Internet of things, in a future evolutional PLMN network, or in an NTN network.

By way of example by not limitation, the network device has mobility in the embodiments of the present disclosure. For example, the network device is a mobile device. In some embodiments, the network device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is also an NB located on land, water, or the like.

In the embodiments of the present disclosure, the network device provides services for cells, and the terminal device communicates with the network device over the transmission resources (such as frequency domain resources, or spectrum resources) used in the cells. The cell corresponds to the network device (such as the NB), and the cell belongs to a macro NB or an NB corresponding to a small cell. The small cell includes a metro cell, a micro cell, a pico cell, a femto cell, or the like. The small cells have small coverage and low transmit power, and are suitable for providing highspeed data transmission services.

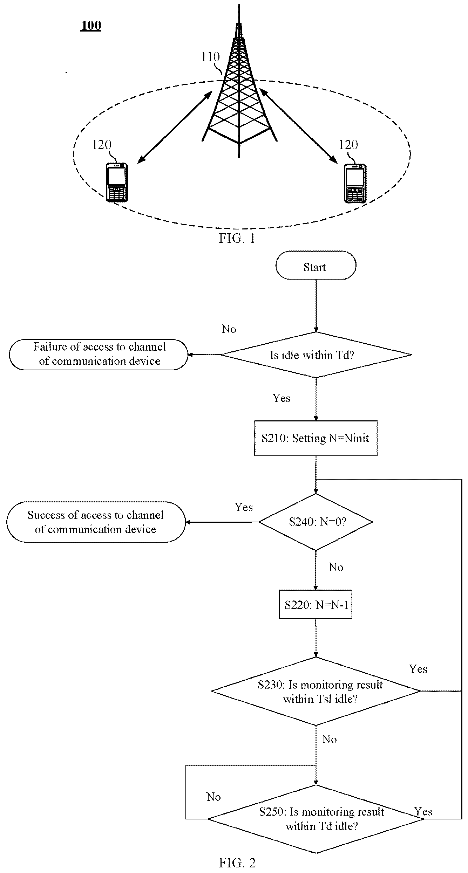

FIG. 1 illustrates a communication system 100. The communication system includes one network device 110 and two terminal devices 120. In some embodiments, the communication system 100 may include a plurality of network devices 110, and another quantity of terminal devices 120 may be deployed within the coverage each of the network devices 110, which is not limited in the embodiments of the present disclosure.

In some embodiments, the communication system 100 may further include another network entity such as a mobile management entity (MME), an access and mobility management function (AMF), or the like, which is not limited in the embodiments of the present disclosure.

The network device may further include an access network device and a core network device. That is, the wireless communication system further includes a plurality of core networks in communication with the access network device. The access network device is an eNB or eNodeB, a macro station, a micro station (also referred to as a "small station"), a pico station, an AP, a transmission points (TP), or a new generation base stations (gNodeB), and the like in an LTE system, an NR system, or an authorized auxiliary access long-term evolution (LAA-LTE) system.

It should be understood that in the embodiments of the present disclosure, devices with the communication function in the network/system are also referred to as the communication device. Using the communication system illustrated in FIG. 1 as an example, the communication device includes a network device and a terminal device with the communication function, the network device and the terminal device may be specific devices in the embodiments of the present disclosure, which are not described herein any further; and the communication device may further include other devices in the communication system, for example, a network controller, a mobile management entity, and other network entities, which is not described in the embodiments of the present disclosure any further.

It should be understood that the terms "system" and "network" herein are interchangeably used herein. The term "and/or" herein merely is used to indicate an association describing associated objects, that is, three types of relationships. For example, the phrase "A and/or B" is used to indicate (A), (B), or (A and B). In addition, the character "/" generally is used to indicate an "or" relationship between the associated objects.

The term "indicate" in the embodiments of the present disclosure means the direct indication, indirect indication, or an association. For example, A indicating B means that A directly is used to indicate B, for example, B is acquired by A; A indirectly is used to indicate B, for example, A is used to indicate C and B is acquired by C; A and B are associated.

The term "corresponding" mean that there is a direct correspondence or indirect correspondence between two objects, an association between two objects, a relationship of indicating or being indicated, or a relationship of configuring and being configured.

For better understanding of the technical solutions according to the embodiments of the present disclosure, the related technologies in the present disclosure are described hereinafter. The following related technologies may be combined with the technical solutions according to the embodiments of the present disclosure arbitrarily, which fall within the scope of protection of the embodiments of the present disclosure.

**Unlicensed spectrum:**

The unlicensed spectrum is a spectrum that is assigned by countries or regions and is used in radio device communication. The spectrum is usually determined as a shared spectrum, that is, the communication devices in different communication systems may use the spectrum as long as the communication device satisfies the regulations set by the countries or regions in the band, without the need to request for exclusive spectrum license from the exclusive spectrum management agency of the countries or regions. For example, the Wi-Fi system is deployed on the unlicensed spectrum.

First, the regulations impose limitations on the bandwidth for data transmission by the communication device on the unlicensed spectrum. That is, the bandwidth occupied by the communication device for transmission should be at least L% of the total spectrum bandwidth. In general, L is equal to 80 in the regulations. For example, assuming that the total bandwidth is 100 physical resource blocks (PRBs), then a different between a lowest PRB index and a highest PRB index used in data transmission by the communication device needs be at least 80. In a case where the communication device needs two PRBs to transmit data, and PRB 1 is occupied, an index of another PRB should be at least 81. In some cases, the bandwidth occupied by the communication device for transmission is at least 2 MHz.

**LBT procedure:**

In the unlicensed spectrum, all communication devices (including the station and the terminal device) need to perform an LBT type-1 LBT procedure prior to transmitting the signals. That is, the communication device needs to perform channel monitoring prior to transmitting the signals on the channel of the unlicensed spectrum, and may transmit the signals in response to the idle status of the channel.

**The LBT procedure includes the following types:**

Type 1

The communication device first monitors channels within a duration of Td. In a case where all monitoring slots within the duration are idle, and N in the following processes is equal to 0, the LBT procedure is successful, and the communication device may occupy the channel to transmit data. Otherwise, the communication device fails to access the channel. In some embodiments, the communication device continues to perform the LBT procedure to access the channel, for example, the communication device continues to monitor the duration of Td.

In S210, N is set to Ninit, wherein Ninit represents a random value from 0 to CWp, and S240 is performed.

In S220, in a case where N is greater than 0, the communication device subtracts 1 from N, that is, N is set to (N-1).

In S230, the communication device continues to monitor a channel within a monitoring slot, S240 is performed in a case where the monitoring slot is idle; otherwise, S250 is performed.

In S240, in a case where N is equal to 0, the procedure is ended; otherwise, S220 is performed.

In S250, the channel is still monitored until a monitoring slot is busy within the duration of Td or all the monitoring slots within the duration of Td are idle, S240 is performed in a case where all monitoring slots within the duration of Td are idle; otherwise, S250 is performed.

The above processes, without indicating a jump, may be performed sequentially. For example, a monitoring slot is denoted as Tsl, and Tsl is equal to 9 $\mu$s. A schematic flowchart of the processes is illustrated in FIG. 2.

CWp is associated with a priority of channel access for the communication device. CWp is also referred to as a contention window corresponding to a specific priority or a contention window determined based on a priority. The communication device determines allowable values of CWmin,p, CWmax,p, and CWp based on the priority of channel access for the communication device, that is, the communication device determines a minimum value, a maximum value, and possible values of the contention window based on priority. For example, in Table 1, in a case where the priority of channel access for the communication device is 3, the minimum value, the maximum value, and the possible values of the contention window used by the communication are 15, 1023, and {15, 31, 63, 127, 255, 511, 1023}. In fact, communication devices maintains the value of the corresponding contention window for each priority. Prior to the process 1, the contention windows corresponding to various priorities are adjusted based on rules. Then, the contention window for used in the LBT procedure is determined based on the priority of channel access to determine Ninit.

For example, the communication device maintains CW1, CW2, CW3, and CW4. In a case where the communication device performs a type-1 LBT procedure, the communication device increases all of CW1, CW2, CW3, and CW4 to next larger allowable values prior to the process 1. In a case where the priority of channel access for the communication device is 1, the communication device uses the adjusted $CW_1$ to perform the type-1 LBT procedure.

Table 1

| CAPC | $m_p$ | $CW_{min,p}$ | $CW_{max,p}$ | $T_{mcot,p}$ | Allowable value of $CW_p$ |
|---|---|---|---|---|---|
| 1 | 2 | 3 | 7 | 2 ms | {3,7} |
| 2 | 2 | 7 | 15 | 4 ms | {7, 15} |
| 3 | 3 | 15 | 1023 | 6 or 10 ms | {15, 31 ,63, 127, 255, 511, 1023} |
| 4 | 7 | 15 | 1023 | 6 or 10 ms | {15, 31, 63, 127, 255, 511, 1023} |

The channel access priority class (CAPC) in the table is also referred to as a channel access priority for short. Td = Tf + mp * Tsl. Tf is equal to 16 $\mu$s, and mp is associated with the channel access priority. For example, a corresponding mp is determined based on the priority from Table 1.

In a case where the communication device performs above processes, the LBT procedure is successful, the communication device does not immediately access the channel and needs to transmit data to the access channel, processes in the type-1 LBT procedure are not all required, and the communication device only needs to monitor the channel occupancy within Td and at least one Tsl duration. In a case where the channel is idle, the communication device directly accesses the channel to transmit the signal.

In a case where the communication device successfully accesses the channel via the LBT procedure, the channel occupancy time is referred to as the COT. Within the COT, the communication device continuously transmits or discontinuously transmits data, but the total transmission time is not greater than Tmcot,p. Tmcot,p is associated with the priority of channel access, and may be found from Table 1, for example.

Type 2

Unlike the type-1 LBT procedure, the communication device only needs to monitor the channel with a fixed-duration in a type-2 LBT procedure. In a case where the monitoring slot is idle within the fixed duration, the communication device directly accesses the channel. Specifically, type 2 includes three sub-types, that is, type 2A, type 2B, and type 2C:

Type 2A: The communication device monitors a channel with 25 $\mu$s (denoted as Tshort). In a case where all monitoring slots are idle within Tshort, the communication device directly accesses the channel.
Type 2B: The communication device monitors a channel with 16 $\mu$s (denoted as Tf). In a case where all monitoring slots are idle within Tf, the communication device directly accesses the channel.
Type 2C: The communication device directly accesses the channel without performing the LBT procedure. The type is only applicable to a case an interval between the transmission and the previous transmission is less than or equal to 16 $\mu$s, the transmission does not exceed 584 $\mu$s.

In some embodiments, the criterion for determining that the monitoring slot is busy is that 4 $\mu$s in 9 $\mu$s are busy. Otherwise, the monitoring slot is idle.

In some embodiments, the criterion for determining that the slot is busy is that a monitored energy or power is greater than or equal to a threshold φ.

**COT sharing:**

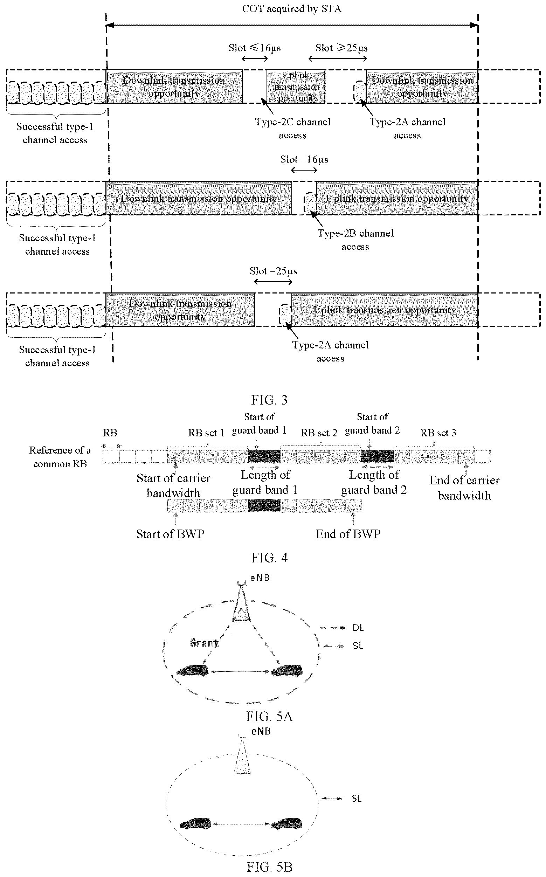

Upon an successful LBT procedure, the communication device supports sharing the acquired COT to other communication devices. Different channel access schemes are applicable to different COT sharing scenarios. For example, the station shares the COT to the terminal. Uplink transmission opportunities occur within the COT of the station. In a case where a gap between a start position of the uplink transmission opportunity and an end position of the downlink transmission opportunity is less than or equal to 16 µs, the UE performs type-2C channel access prior to the uplink transmission. In a case where a gap between a start position of the uplink transmission opportunity and an end position of the downlink transmission opportunity is equal to 16 µs, the UE performs type-2B channel access prior to the uplink transmission. In a case where a gap between a start position of the uplink transmission opportunity and an end position of the downlink transmission opportunity is equal to or greater than 25 µs, the UE performs type-2A channel access prior to the uplink transmission. In addition, the COT acquired by the station includes a plurality of uplink-downlink transition points. Upon sharing the acquired COT to the UE for uplink transmission, the station may also use type 2 channel access mode, such as type 2A channel access, for channel monitoring within the COT, and reperform downlink transmission upon successful channel monitoring. FIG. 3 illustrates an example of COT sharing by the station.

RB set

As illustrated in FIG. 4, in the NR-unlicensed (U) system, frequency-domain resources on the carrier are organized into several RB sets, and guard bands are configured between the RB sets. For example, an RB set corresponds to a 20 MHz frequency-domain width. The communication device performs the LBT procedure with a granularity of an RB set, and thus an RB set is also referred to as an LBT sub-band. That is, in a case where the communication device transmits data on an RB set, the communication device needs to perform the LBT procedure on the corresponding RB set, and transmits data upon a successful LBT procedure.

**SL transmission**

The SL transmission means direct transmission between terminals via the SL, which is different from a mode where communication data is received or transmitted by the station in the traditional cellular system. The V2X system also supports the SL transmission (V2V) mode, and thus has a higher spectral efficiency and a lower transmission delay. For the SL transmission, 3GPP defined two transmission modes: mode A and mode B, as illustrated in FIG. 5A and FIG. 5B.

In mode A, the transmission resources for the SL UE are assigned by the station. The SL UE transmits data on the SL based on the resources assigned by the station. The station may assign single-transmission resources or semi-static transmission resources to the SL UE.

In mode B, the SL UE selects resources from the resource pool for data transmission. Specifically, the SL UE selects transmission resources from the resource pool by monitoring or by randomly selecting.

The SL UE refers to the terminal performing SL transmission, for example, a terminal in D2D or a vehicle terminal in V2X.

**DRX mechanism in UU interface**

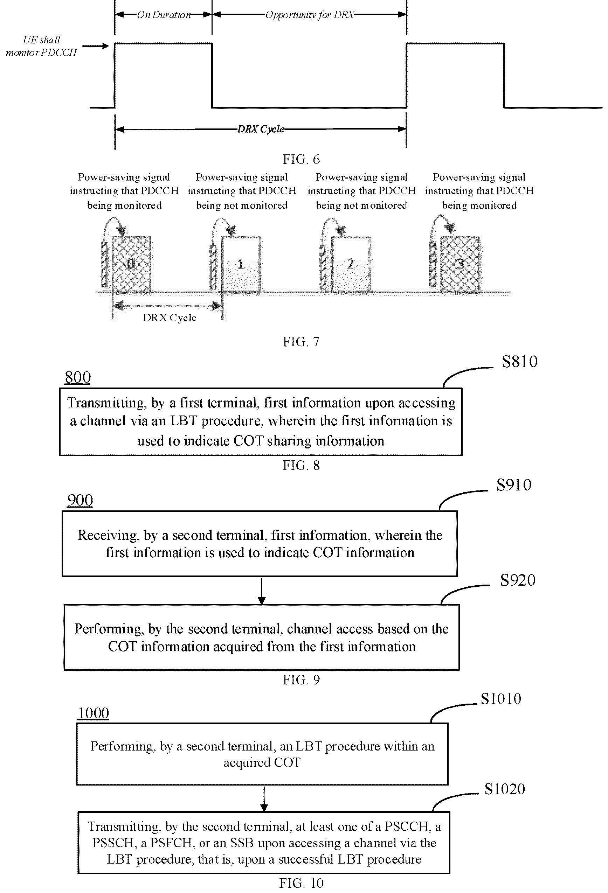

As illustrated in FIG. 6, in the wireless network, the user terminal needs to continuously monitor a physical downlink control channel (PDCCH) and transmit and receive data based on instructions from the network, such that the power consumption and the data transmission delay of the UE are great. Therefore, a DRX power-saving strategy is introduced in the LTE system in the 3GPP standards.

A basic DRX mechanism is to configure a DRX cycle for the UE. The DRX cycle include an on duration and an opportunity for DRX. The UE monitors and receives the PDCCH (an activation period) during the "on duration" period, and does not receive the PDCCH to reduce the power consumption (a sleep period) during the "opportunity for DRX" period.

During the DRX operation, the terminal controls whether the terminal is in an active status or a sleep status based on timer parameters configured by the network.

For example, the DRX on duration timer (drx-onDurationTimer) parameter is used to indicate a duration of the "on duration" period, and a DRX long cycle start offset (drx-LongCycleStartOffset) and a DRX slot offset (drx-SlotOffset) indicate the start position of the DRX cycle. The terminal starts a timer with a duration equal to a value indicated by the drx-onDurationTimer parameter at the start position of the DRX cycle based on the parameters, and keeps the active status until the timer count reaches 0.

In a case where the terminal detects the PDCCH within the "on duration" period (that is, before the on duration timer reaches 0), the terminal also start an inactivity timer, a re-transmission timer, and the like to prolong the active status to receive scheduled data or retransmit data.

**Power-saving signal such as a wake-up signal (WUS) in the NR system**

The traditional terminal power-saving mechanism is mainly for DRX. In configuring the DRX, the terminal monitors the PDCCH during the DRX on duration. In a case where the terminal receives data scheduling during the on duration, the terminal continuously monitors the PDCCH based on the control of the DRX timer until the data transmission is completed. Otherwise, in a case where the terminal does not receive data scheduling during the DRX on duration, the terminal enters a sleep state to save the power. Thus, the DRX is a power-saving control mechanism with the time granularity of the DRX cycle, and therefore fails to achieve the optimal power consumption control. For example, even if there is no data scheduling for the terminal, the terminal still needs to monitor the PDCCH during the periodic start of operation of the DRX on duration timer, and thus the power is still wasted.

For further power saving for the terminal, power-saving wake-up signals are introduced by NR power-saving enhancement. The standardized power-saving wake-up signals are combined with the DRX mechanism. The specific technical principle is that the terminal receives the indication of the power-saving wake-up signal prior to the DRX on duration. As illustrated in FIG. 7, in a case where the terminal transmits the data within a DRX cycle, for example, the station schedules the downlink transmission to the terminal, the power-saving wake-up signal is configured to "wake up" the terminal to monitor the PDCCH during the DRX on duration. On the contrary, in a case where the terminal has no data transmission within a DRX cycle, the power-saving wake-up signal is not configured to "wake up" the terminal. The terminal does not need to monitor the PDCCH within the DRX on duration. Compared with the traditional DRX mechanism, the terminal may omit the PDCCH monitoring within the DRX on duration in a case of no data transmission, such that the power is saved.

**Power-saving signal based on the PDCCH**

Power-saving signals may be sequence-based signals or PDCCH-based signals. The power-saving indication signal carried by the PDCCH has the following advantages, and thus the PDCCH is used as the power-saving signal in the NR system.

(1) The power-saving indication signal carried by the PDCCH may directly use the existing PDCCH design, including encoding, scrambling, resource mapping, search space, CORESET, and the like, and thus the standardization workload is reduced.
(2) The power-saving indication signal carried by the PDCCH has great compatibility and multiplexing characteristics with other signal transmissions. As the existing system supports the PDCCH, and the PDCCH has great compatibility and multiplexing characteristics with other channels such as the PDSCH, and like.

In the SL version of R17, the SL DRX has been introduced, but the SL WUS is introduced for further energy-saving and power-saving. In the SL version of R18, the basic version of sidelink-unlicensed (SL-U), that is, the SL system operating in the unlicensed band, is discussing. In the future, the existing SL DRX mechanism is reused or the SL WUS is introduced in designing the energy-saving and power-saving mechanism for the SL-U system. For example, UE 1 performs the LBT procedure, and transmits the WUS to wake up UE 2 in response to a successful LBT procedure, such that UE 2 monitors a physical sidelink control channel (PSCCH) and/or a physical sidelink shared channel (PSSCH) during the activation time of the DRX. UE 1 transmits the PSCCH and/or the PSSCH to UE 2 during the activation time. In a case where UE 1 does not transmit the WUS, UE 2 does not monitor the PSCCH and/or the PSSCH, such that energy-saving and power-saving are achieved.

FIG. 8 is a schematic flowchart of a method 800 for SL communication according to some embodiments of the present disclosure. The method is applicable to the system illustrated in FIG. 1, but not limited to this. The method includes at least part of following descriptions.

In S810, a first terminal transmits first information upon accessing a channel via an LBT procedure, wherein the first information is used to indicate COT sharing information.

In the embodiments of the present disclosure, in the SL communication scenarios, upon a successful LBT procedure (that is, accessing the channel via the LBT procedure, or accessing the channel upon the successful LBT procedure) the first terminal transmits the first information to the second terminal on the SL, and shares the COT of the first terminal to the second terminal via the first information. The terminals share the COT, such that the utilization efficiency of the COT and the resource utilization rate in the SL communication system are improved. Furthermore, contention for the unlicensed channel with other system (for example, the Wi-Fi system) is facilitated.

In some embodiments, the first information is a first sequence.

In some embodiments, the first information is a WUS. For example, the WUS is a signal based on the first sequence. The WUS is also referred to as the power-saving wake-up signal.

In the embodiments of the present disclosure, the communication device performs the LBT on the unlicensed spectrum, and shares the COT to other communication devices upon successful access of the channel. For example, in a case where UE 1 successfully transmits the WUS upon the successful LBT procedure, the COT acquired by UE 1 is shared to other UEs via the WUS. In a case where the WUS is a sequence-based signal, the COT sharing information is indicated by the WUS.

In some embodiments, the first information is transmitted within a COT acquired by the first terminal upon the successful LBT procedure.

In some embodiments, a resource carrying the first information includes at least one of a PSCCH resource or a physical sidelink feedback channel (PSFCH) resource.

In the embodiments of the present disclosure, the first terminal transmits the first sequence upon the successful LBT procedure. The first information is transmitted within the COT acquired by the first terminal upon a successful LBT procedure. The first terminal shares the COT by transmitting the first sequence. The first sequence is a power-saving wake-up signal. The LBT procedure may be a type-1 LBT procedure. The resource carrying the first sequence is the PSCCH resource or the PSFCH resource.

In some embodiments, the COT sharing information (referred to as COT information) indicated by the first information includes at least one of a CAPC, a COT duration, a COT start position, or information of a COT RB set. In the embodiments of the present disclosure, the CAPC in the COT sharing information is a CAPC corresponding to the COT shared by the first terminal. The COT duration in the COT sharing information is a COT duration corresponding to the COT shared by the first terminal. The COT start position in the COT sharing information is a COT start position corresponding to the COT shared by the first terminal. The information of the COT RB set in the COT sharing information is information of an RB set corresponding to the COT shared by the first terminal.

In the embodiments of the present disclosure, the second terminal acquires at least one of the COT sharing information based on the first sequence.

In some embodiments, the CAPC in the COT sharing information includes a CAPC for transmitting a first sequence or a CAPC for the LBT procedure used in transmitting a first sequence by the first terminal.

In some embodiments, the CAPC is configured by a network, preconfigured, or predefined in a protocol. In the embodiments of the present disclosure, configuration by the network may be configuration via a radio resource control (RRC) message or configuration by the network via a system information block (SIB) message. The pre-configuration may be factory configuration or previous configuration by other networks. Predefinition in the protocol may be written in the protocol.

In some embodiments, the CAPC is carried in resource pool configuration or BWP configuration. The resource pool may include an SL resource. The BWP configuration may be SL BWP configuration. In some embodiments, the CAPC corresponding to the COT shared by the first terminal is configured by a network, preconfigured, or predefined in a protocol. Upon receiving the first sequence, the second terminal acquires the corresponding CAPC. For example, upon receiving the first sequence, the second terminal acquires the CAPC corresponding to the COT shared by the first terminal in the resource pool configuration or BWP configuration. Alternatively, upon receiving the first sequence, the second terminal acquires the CAPC corresponding to the COT shared by the first terminal predefined in the protocol. The CAPC corresponding to the shared COT is the CAPC for transmitting the first sequence or the CAPC for the LBT procedure used in transmitting the first sequence by the first terminal. Illustratively, the CAPC corresponding to the shared COT is included in the resource pool configuration or the BWP configuration, for example, the SL BWP configuration.

In some embodiments, the CAPC is configured to generate a phase, a phase shift, or a cyclic shift of a first sequence. In some embodiments, the first terminal determines the CAPC as a parameter for generating the first sequence, and the second terminal acquires the corresponding CAPC upon receiving the first sequence. Illustratively, the CAPC is configured to generate the phase of the first sequence. Illustratively, the CAPC is configured to determine the cyclic shift of the first sequence.

In some embodiments, a mapping is present between a first index and the CAPC. The second terminal acquires the corresponding CAPC based on the first index. A CAPC corresponds to one or more indexes. For example, CAPC 0 corresponds to first indexes 0 and 1, and CAPC 1 corresponds to first indexes 2, 3, and 4.

In some embodiments, the correspondence of the first index and the CAPC is configured by a network, preconfigured, or predefined in a protocol.

In some embodiments, the mapping between the first index and the CAPC is carried in resource pool configuration or BWP configuration, for example, SL BWP configuration.

In some embodiments, the first index is an index of a WUS.

In some embodiments, the first index corresponding to the CAPC is configured to generate a phase, a phase shift, or a cyclic shift of a first sequence.

In some embodiments, the first terminal determines the first index as a parameter for generating the first sequence, and the second terminal acquires the first index upon receiving the first sequence. Illustratively, the first index is configured to generate the phase of the first sequence. Illustratively, the first index is configured to determine the cyclic shift of the first sequence.

In some embodiments, the COT duration in the COT sharing information includes a COT duration acquired by the first terminal upon a successful LBT procedure, a remaining COT duration or a COT duration usable by a second terminal upon information transmission by the first terminal upon the successful LBT procedure.

In some embodiments, the COT duration is configured by a network, preconfigured, or predefined in a protocol.

In some embodiments, the COT duration is carried in resource pool configuration or SL BWP configuration.

In some embodiments, upon receiving the first sequence, the second terminal acquires the COT duration corresponding to the COT shared by the first terminal, for example, the second terminal acquires the COT duration configured in the resource pool configuration or BWP configuration, or acquires the predefined COT duration. The COT duration corresponding to the COT shared by the first terminal may be the COT duration acquired by the first terminal upon the successful LBT procedure, the remaining COT duration or the COT duration usable by the second terminal upon information transmission by the first terminal upon the successful LBT procedure. Illustratively, the COT duration corresponding to the COT shared by the first terminal is included in the resource pool configuration or the BWP configuration, for example, SL BWP configuration.

In some embodiments, a mapping is present between the CAPC and the COT duration. In some embodiments, the second terminal determines the COT duration corresponding to the COT shared by the first terminal based on the CAPC corresponding to the COT shared by the first terminal.

In some embodiments, the mapping between the CAPC and the COT duration is configured by a network, preconfigured, or predefined in a protocol.

In some embodiments, the mapping between the CAPC and the COT duration is carried in resource pool configuration or BWP configuration, for example, SL BWP configuration.

In some embodiments, a mapping is present between a first index and the COT duration.

In some embodiments, the mapping between the first index and the COT duration is configured by a network, preconfigured, or predefined in a protocol.

In some embodiments, the mapping between the first index and the COT duration is carried in resource pool configuration or BWP configuration, for example, SL BWP configuration.

In some embodiments, a mapping is present between the first index, the CAPC, and the COT duration. For example, a value 0 of the first index and a value 0 of the CAPC correspond to a COT duration a. For example, a value 1 of the first index and a value 0 of the CAPC correspond to a COT duration b. The mapping is configured by a network, preconfigured, or predefined in a protocol, and is carried in resource pool configuration or BWP configuration, for example, SL BWP configuration.

In some embodiments, a mapping is present between the first index, the CAPC, the COT duration, and the first offset. For example, a value 2 of the first index, a value 1 of the CAPC and a COT duration b correspond to a first offset of a first duration. For example, a value 3 of the first index, a value 1 of the CAPC, and a COT duration c correspond to a first offset of a second duration. The mapping is configured by a network, preconfigured, or predefined in a protocol, and is carried in resource pool configuration or BWP configuration, for example, SL BWP configuration.

In some embodiments, the first terminal determines the first index as a parameter for generating the first sequence, and the second terminal acquires the first index upon receiving the first sequence. Illustratively, the first index is configured to generate the phase of the first sequence. Illustratively, the first index is configured to determine the cyclic shift of the first sequence. As the first index is mapped to the COT duration, the second terminal acquires the corresponding COT duration based on the first index.

In some embodiments, the COT start position in the COT sharing information is determined based on a time-domain position of transmission of a first sequence or a time-domain position of a resource carrying a first sequence.

In some embodiments, the COT start position includes at least one of a time-domain start position of the transmission of the first sequence or a time-domain end position of the transmission of the first sequence.

In some embodiments, the COT start position is determined based at least one of a time-domain start position of the transmission of the first sequence, a time-domain end position of the transmission of the first sequence, or a first offset of the transmission of the first sequence.

In some embodiments, the start position of the COT shared by the first terminal is determined based on the time-domain position of transmission of the first sequence or the time-domain position of the resource carrying the first sequence. In some embodiments, the start position of the COT shared by the first terminal is the time-domain start position or the time-domain end position of the transmission of the first sequence. In some embodiments, the start position of the COT shared by the first terminal is a sum of the time-domain start position or the time-domain end position of the transmission of the first sequence and the first offset of the transmission of the first sequence.

In some embodiments, the first offset is configured by a network, preconfigured, or predefined in a protocol. The second terminal acquires the first offset upon receiving the first sequence, for example, the second terminal acquires the first offset configured in the resource pool configuration or BWP configuration, or acquires the predefined first offset.

In some embodiments, a mapping is present between the first index and the first offset. The second terminal acquires the corresponding first offset based on the first index. Illustratively, the first terminal determines the first index as a parameter for generating the first sequence. Upon receiving the first sequence, the second terminal acquires the first index, generates the first sequence based on the first index, and acquires the first offset. Illustratively, the first index is configured to generate a phase of the first sequence. Illustratively, the first index is configured to determine a cyclic shift of the first sequence.

In some embodiments, the mapping between the first index and the first offset is configured by a network, preconfigured, or predefined in a protocol.

In some embodiments, the mapping between the first index and the first offset is carried in resource pool configuration or BWP configuration, for example, SL BWP configuration.

In some embodiments, the first offset is configured to generate a phase, a phase shift, or a cyclic shift of a first sequence.

In some embodiments, the first terminal determines the first offset as a parameter for generating the first sequence. Upon receiving the first sequence, the second terminal acquires the first offset. Illustratively, the first offset is configured to generate a phase of the first sequence. Illustratively, the first offset is used to determine a cyclic shift of the first sequence.

In some embodiments, the information of the COT RB set in the COT sharing information is determined based on an RB set corresponding to transmission of a first sequence.

In some embodiments, the COT RB set is an RB set for the transmission of the first sequence.

In some embodiments, the information of the RB set of the COT shared by the first terminal is determined based on the RB set corresponding to the transmission of the first sequence. For example, the RB set of the COT shared by the first terminal is the RB set for the transmission of the first sequence.

In some embodiments, a parameter for generating a first sequence includes at least one of the CAPC, a first index, a first offset, a sequence length, a sequence index, a sequence group index, a random integer, or a random sequence. The random integer and/or the random sequence is known to both the receiver and the transmitter. The receiver and the transmitter may generate the same random integer and/or the random sequence using the same algorithm and/or the same configuration parameter. The first offset may include a time offset. For example, the first offset includes a duration from T1 to T2, a duration from T1 to T3, and the like. T1 is a start position of transmission of the WUS, T2 is an end position of transmission of the WUS, and T3 is a start position of the shared COT determined based on the start position or the end position of the transmission of the WUS and the first offset.

In some embodiments, the first sequence x(n) is generated by:

$$x(n) = e^{j\alpha n} r_u(n)$$

In this equation, $n$ represents the index of the sequence, $n$ = 0, 1,..., A-1, and A represents the sequence length. For example, a value 12 of A is used to indicate a number of resource elements (REs) in a PRB. $r_u(n)$ is determined based on frequency hopping configuration. For example, $r_u(n) = e^{j\varphi(n)\pi/4}$. In this equation, $\varphi(n)$ is as listed in Table 2, u=$n_{ID}$mod30 represents a group index of the sequence, and $n_{ID}$ is configured by an RRC layer parameter *sl-PSFCH-HopID.*

Table 2

| u | $\varphi(0), \varphi(1), ..., \varphi(11)$ | | | | | | | | | | | |
|---|----|----|----|----|----|----|----|----|----|----|----|----|
| 0 | -3 | 1 | -3 | -3 | -3 | 3 | -3 | -1 | 1 | 1 | 1 | -3 |
| 1 | -3 | 3 | 1 | -3 | 1 | 3 | -1 | -1 | 1 | 3 | 3 | 3 |
| 2 | -3 | 3 | 3 | 1 | -3 | 3 | -1 | 1 | 3 | -3 | 3 | -3 |
| 3 | -3 | -3 | -1 | 3 | 3 | 3 | -3 | 3 | -3 | 1 | -1 | -3 |
| 4 | -3 | -1 | -1 | 1 | 3 | 1 | 1 | -1 | 1 | -1 | -3 | 1 |
| 5 | -3 | -3 | 3 | 1 | -3 | -3 | -3 | -1 | 3 | -1 | 1 | 3 |
| 6 | 1 | -1 | 3 | -1 | -1 | -1 | -3 | -1 | 1 | 1 | 1 | -3 |

Furthermore, $\alpha$ represents the phase, the phase shift or the cyclic shift of the first sequence. $e^{j\alpha n}$ represents an Euler formula, that is, $e^{j\alpha n} = cos(\alpha n) + jsin(\alpha n)$. The CAPC (referred to as the CAPC), the first index, the first offset, and the like are configured to generate $\alpha$. Furthermore, the first sequence is determined based on one or more of the CAPC, the first index, the first offset, the sequence length, the random integer, or the random sequence. For example, the phase (the phase shift or the cyclic shift) of the first sequence is determined based on the CAPC, the random integer, and the sequence length, and the first sequence is then generated based on the phase (the phase shift or the cyclic shift) of the first sequence, the sequence index, and the group index of the sequence. For example, the phase (the phase shift or the cyclic shift) of the first sequence is determined based on the first index, the random sequence, and the sequence length, and the first sequence is generated based on the phase (the phase shift or the cyclic shift) of the first sequence, the sequence index, and the group index of the sequence. For example, the phase (the phase shift or the cyclic shift) of the first sequence is determined based on the first offset, the random sequence, and the sequence length, and the first sequence is generated based on the phase (the phase shift or the cyclic shift) of the first sequence, the sequence index, and the group index of the sequence.

For example, $\alpha = \frac{2\pi}{A}\left((B + C + D)\bmod A\right)$, or $\alpha = \frac{2\pi}{A}\left((C + D)\bmod A\right)$. In these equations, A represents the sequence length, B is 0 or 1, C represents the first index, the CAPC, or the first offset, and D represents the random integer, an integer generated based on the random sequence, or an integer generated based on the time-domain position or frequency-domain position of the first sequence x(n).

In some embodiments, upon receiving the first sequence, the second terminal performs channel access based on the acquired COT information. For example, the second terminal performs the LBT procedure within the acquired COT. The LBT procedure may be a type-2A LBT procedure, a type-2B LBT procedure, or a type-2C LBT procedure. For example, in a case where the CAPC of the second terminal is greater than or equal to the CAPC shared by the COT, the second terminal performs the LBT within the acquired COT. The LBT may be a type-2A LBT procedure, a type-2B LBT procedure, or a type-2C LBT procedure. For example, the second terminal transmits the PSCCH, the PSSCH, the PSFCH, or a synchronization signals and physical broadcast channel block (SSB) upon a successful LBT procedure.

FIG. 9 is a schematic flowchart of a method 900 for SL communication according to some embodiments of the present disclosure. The method is applicable to the system illustrated in FIG. 1, but not limited to the system. The method includes at least part of following processes.

In S910, a second terminal receives first information, wherein the first information is used to indicate COT information.

In S920, the second terminal performs channel access based on the COT information acquired from the first information.

In the embodiments of the present disclosure, upon accessing the channel via an LBT procedure, that is, a successful LBT procedure, the first terminal transmits the first information to the second terminal on the SL, and shares the COT of the first terminal to the second terminal via the first information. The second terminal performs the channel access based on the COT of the first terminal indicated by the first information upon the successful LBT procedure.

In some embodiments, the first information is a first sequence.

In some embodiments, the first information is a WUS.

In some embodiments, the first information is transmitted within a COT acquired by a first terminal upon the successful LBT procedure.

In some embodiments, a resource carrying the first information includes at least one of a PSCCH resource or a PSFCH resource.

In some embodiments, COT sharing information indicated by the first information includes at least one of a CAPC, a COT duration, a COT start position, or information of a COT RB set. Upon receiving the first information, the second terminal determines one or more COT sharing information based on the sequence from the first terminal.

In some embodiments, the CAPC includes a CAPC for transmitting a first sequence or a CAPC for the LBT procedure used in transmitting a first sequence by a first terminal.

In some embodiments, the CAPC is configured by a network, preconfigured, or predefined in a protocol.

In some embodiments, the CAPC is carried in resource pool configuration or SL BWP configuration.

In some embodiments, the CAPC is configured to generate a phase, a phase shift, or a cyclic shift of a first sequence.

In some embodiments, a mapping is present between a first index and the CAPC.

In some embodiments, the mapping between the first index and the CAPC is configured by a network, preconfigured, or predefined in a protocol.

In some embodiments, the mapping between the first index and the CAPC is carried in resource pool configuration or SL BWP configuration.

In some embodiments, the first index is an index of a WUS.

In some embodiments, the first index corresponding to the CAPC is configured to generate a phase, a phase shift, or a cyclic shift of a first sequence.

In some embodiments, the COT duration includes a COT duration acquired by a first terminal upon accessing a channel via the LBT procedure (a COT duration acquired upon a successful LBT procedure), a remaining COT duration (a remaining COT duration upon successful information transmission via the LBT procedure) or a COT duration usable by the second terminal upon information transmission by a first terminal that accesses a channel via the LBT procedure.

In some embodiments, the COT duration is configured by a network, preconfigured, or predefined in a protocol.

In some embodiments, the COT duration is carried in resource pool configuration or SL BWP configuration.

In some embodiments, a mapping is present between the CAPC and the COT duration.

In some embodiments, the mapping between the CAPC and the COT duration is configured by a network, preconfigured, or predefined in a protocol.

In some embodiments, the mapping between the CAPC and the COT duration is carried in resource pool configuration or SL BWP configuration.

In some embodiments, a mapping is present between a first index and the COT duration.

In some embodiments, the mapping between the first index and the COT duration is configured by a network, preconfigured, or predefined in a protocol.

In some embodiments, the mapping between the first index and the COT duration is carried in resource pool configuration or SL BWP configuration.

In some embodiments, the first index corresponding to the COT duration is configured to generate a phase, a phase shift, or a cyclic shift of a first sequence.

In some embodiments, the COT start position is determined based on a time-domain position of transmission of a first sequence or a time-domain position of a resource carrying a first sequence.

In some embodiments, the COT start position includes at least one of a time-domain start position of the transmission of the first sequence or a time-domain end position of the transmission of the first sequence.

In some embodiments, the COT start position is determined based at least one of a time-domain start position of the transmission of the first sequence, a time-domain end position of the transmission of the first sequence, or a first offset of the transmission of the first sequence.

In some embodiments, the first offset is configured by a network, preconfigured, or predefined in a protocol.

In some embodiments, the first offset is configured to generate a phase, a phase shift, or a cyclic shift of the first sequence.

In some embodiments, a mapping is present between a first index and the first offset.

In some embodiments, the mapping between the first index and the first offset is configured by a network, preconfigured, or predefined in a protocol.

In some embodiments, the mapping between the first index and the first offset is carried in resource pool configuration or SL BWP configuration.

In some embodiments, the first index corresponding to the first offset is configured to generate a phase, a phase shift, or a cyclic shift of a first sequence.

In some embodiments, the information of the COT RB set is determined based on an RB set corresponding to transmission of a first sequence.

In some embodiments, the COT RB set is an RB set for the transmission of the first sequence.

In some embodiments, a parameter for generating a first sequence includes at least one of the CAPC, a first index, a first offset, a sequence length, a sequence index, a sequence group index, a random integer, or a random sequence.

FIG. 10 is a schematic flowchart of a method 1000 for SL communication according to some embodiments of the present disclosure. The method includes one or more features in the above methods. In some embodiments, performing, by the second terminal, the channel access based on the COT information acquired from the first information in S920 includes: performing, by the second terminal, an LBT procedure within the acquired COT in S1010.

In some embodiments, performing, by the second terminal, the LBT procedure within the COT acquired by the second terminal includes: performing, by the second terminal, the LBT procedure within the acquired COT in a case where a CAPC of the second terminal is higher than or equal to a CAPC shared by the COT.

In some embodiments, as illustrated in FIG. 10, the channel access based on the COT information acquired from the first information in S920 includes: transmitting, by the second terminal, at least one of a PSCCH, a PSSCH, a PSFCH, or an SSB upon accessing a channel via the LBT procedure, that is, upon a successful LBT procedure in S1020.

For examples of the methods 900 and 1000 performed by the second terminal, reference may be made to related description of the second terminal in the method 800 performed by the first terminal, which are not described herein any further for brevity.

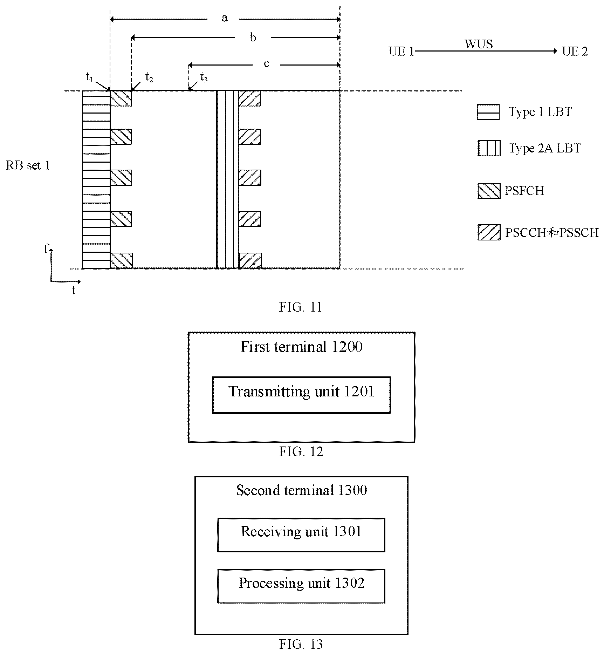

As illustrated in FIG. 11, UE 1 performs a type-1 LBT procedure, and acquires the COT (that is, a duration a starting from tl in FIG. 11) upon a successful LBT procedure. Within the COT, UE 1 transmits a power-saving wake-up signal to UE 2. The power-saving wake-up signal is carried via a PSFCH. The power-saving wake-up signal may be a sequence. UE 1 may share the COT with UE 2 via the power-saving wake-up signal.

Example 1

A CAPC of a COT shared via a WUS and a duration a of the COT shared via the WUS are configured in resource pool configuration of UE 1 and UE 2. Assuming that a start position of the shared COT is a start position of transmission of the WUS, and an RB set corresponding to the shared COT is an RB set of the transmission of the WUS, then upon receiving the WUS from UE 1, UE 2 acquires the start position t1 of the shared COT and the RB set corresponding to the shared COT as RB set 1 based on the time-frequency resource position of the WUS. Meanwhile, UE 2 determines the CAPC of the shared COT and the duration of the COT as the duration a based on the resource pool configuration. That is, UE 2 finally determines that the shared COT corresponds to RB set 1 in the frequency domain and a duration a starting from t1 in the time domain. In a case where the CAPC of UE 2 is higher than or equal to the CAPC of the shared COT, as illustrated in FIG. 11, UE 2 performs a type-2A LBT procedure within the shared COT, and transmits a PSCCH and a PSSCH within the COT upon a successful LBT procedure.

Example 2

A CAPC of a COT shared via a WUS and a duration b of the COT shared via the WUS are configured in resource pool configuration of UE 1 and UE 2. Assuming that a start position of the shared COT is an end position of transmission of the WUS, and an RB set corresponding to the shared COT is an RB set of the transmission of the WUS, then upon receiving the WUS from UE 1, UE 2 acquires the start position t2 of the shared COT and the RB set corresponding to the shared COT as RB set 1 based on the time-frequency resource position of the WUS. Meanwhile, UE 2 determines the CAPC of the shared COT and the duration of the COT as the duration b based on the resource pool configuration. That is, UE 2 finally determines that the shared COT corresponds to RB set 1 in the frequency domain and a duration b starting from t2 in the time domain. In a case where the CAPC of UE 2 is higher than or equal to the CAPC of the shared COT, as illustrated in FIG. 11, UE 2 performs a type-2A LBT procedure within the shared COT, and transmits a PSCCH and a PSSCH within the COT upon a successful LBT procedure.

Example 3

A CAPC of a COT shared via a WUS, a duration c of the COT shared via the WUS, and the first offset of the shared COT with an interval from t1 to t3 are configured in resource pool configuration of UE 1 and UE 2. Assuming that a start position of the shared COT is a start position of transmission of the WUS plus the first offset, and an RB set corresponding to the shared COT is an RB set of the transmission of the WUS, then upon receiving the WUS from UE 1, UE 2 acquires the start position t1 of the transmission of the WUS based on the time-frequency resource position of the WUS, determines the start position t3 of the shared COT based on the first offset in the resource pool configuration, and acquires the RB set corresponding to the shared COT as RB set 1 based on the time-frequency resource position of the WUS. Meanwhile, UE 2 determines the CAPC of the shared COT and the duration of the COT as the duration c based on the resource pool configuration. That is, UE 2 finally determines that the shared COT corresponds to RB set 1 in the frequency domain and a duration c starting from t3 in the time domain. In a case where the CAPC of UE 2 is higher than or equal to the CAPC of the shared COT, as illustrated in FIG. 11, UE 2 performs a type-2A LBT procedure within the shared COT, and transmits a PSCCH and a PSSCH within the COT upon a successful LBT procedure.

Table 3

| CAPC | COT duration |
|------|--------------|
| 0    | a            |
| 1    | b            |
| 2    | c            |
| 3    | d            |

Example 4

A CAPC and a corresponding COT duration (as listed in Table 3) are configured in resource pool configuration of UE 1 and UE 2. It is assumed that a start position of the shared COT is a start position of transmission of the WUS, and an RB set corresponding to the shared COT is an RB set of the transmission of the WUS. It is assumed that the CAPC used by UE 1 in performing a type-1 LBT procedure is 0, and UE 1 generates a sequence of the WUS based on the CAPC 0, then upon receiving the WUS from UE 1, UE 2 acquires the CAPC of the shared COT as 0 and the corresponding duration of the shared COT as a according to Table 3 in the resource pool configuration. Meanwhile, UE 2 acquires the start position tl of the shared COT and the RB set corresponding to the shared COT as RB set 1 based on the time-frequency resource position of the WUS. That is, UE 2 finally determines that the shared COT corresponds to RB set 1 in the frequency domain and a duration a starting from tl in the time domain. In a case where the CAPC of UE 2 is higher than or equal to the CAPC of the shared COT, as illustrated in FIG. 11, UE 2 performs a type-2A LBT procedure within the shared COT, and transmits a PSCCH and a PSSCH within the COT upon a successful LBT procedure.

Example 5

A CAPC and a corresponding COT duration (as listed in Table 3) are configured in resource pool configuration of UE 1 and UE 2. It is assumed that a start position of the shared COT is an end position of transmission of the WUS, and an RB set corresponding to the shared COT is an RB set of the transmission of the WUS. It is assumed that the CAPC used by UE 1 in performing a type-1 LBT procedure is 1, and UE 1 generates a sequence of the WUS based on the CAPC 1, then upon receiving the WUS from UE 1, UE 2 acquires the CAPC of the shared COT as 1 and the corresponding duration of the shared COT as b according to Table 3 in the resource pool configuration. Meanwhile, UE 2 acquires the start position t2 of the shared COT and the RB set corresponding to the shared COT as RB set 1 based on the time-frequency resource position of the WUS. That is, UE 2 finally determines that the shared COT corresponds to RB set 1 in the frequency domain and a duration b starting from t3 in the time domain. In a case where the CAPC of UE 2 is higher than or equal to the CAPC of the shared COT, as illustrated in FIG. 11, UE 2 performs a type-2A LBT procedure within the shared COT, and transmits a PSCCH and a PSSCH within the COT upon a successful LBT procedure.

Example 6

A CAPC and a corresponding COT duration (as listed in Table 3) are configured in resource pool configuration of UE 1 and UE 2, and a first offset with an interval from t1 to t3 is predefined in the protocol. It is assumed that a start position of the shared COT is a start position of transmission of the WUS plus the first offset, and an RB set corresponding to the shared COT is an RB set of the transmission of the WUS. It is assumed that the CAPC used by UE 1 in performing a type-1 LBT procedure is 2, and UE 1 generates a sequence of the WUS based on the CAPC 2, then upon receiving the WUS from UE 1, UE 2 acquires the CAPC of the shared COT as 2 and the corresponding duration of the shared COT as c according to Table 3 in the resource pool configuration. Meanwhile, upon receiving the WUS from UE 1, UE 2 acquires the start position t1 of the transmission of the WUS based on the time-frequency resource position of the WUS, determines the start position t3 of the shared COT based on the first offset predefined in the protocol, and acquires the RB set corresponding to the shared COT as RB set 1 based on the time-frequency resource position of the WUS. That is, UE 2 finally determines that the shared COT corresponds to RB set 1 in the frequency domain and a duration c starting from t3 in the time domain. In a case where the CAPC of UE 2 is higher than or equal to the CAPC of the shared COT, as illustrated in FIG. 11, UE 2 performs a type-2A LBT procedure within the shared COT, and transmits a PSCCH and a PSSCH within the COT upon a successful LBT procedure.

Table 4

| First index | CAPC | COT duration |
| --- | --- | --- |
| 0 | 0 | a |
| 1 | 0 | b |
| 2 | 1 | b |
| 3 | 1 | c |
| 4 | 2 | c |
| 5 | 3 | d |

Example 7

A first index, a corresponding CAPC, and a corresponding COT duration (as listed in Table 4) are configured in resource pool configuration of UE 1 and UE 2. It is assumed that a start position of the shared COT is a start position of transmission of the WUS, and an RB set corresponding to the shared COT is an RB set of the transmission of the WUS. It is assumed that the CAPC used by UE 1 in performing a type-1 LBT procedure is 0, and UE 1 generates a sequence of the WUS based on the first index 0, then upon receiving the WUS from UE 1, UE 2 acquires the first index 0, acquires the CAPC of the shared COT as 0 according to Table 4 in the resource pool configuration, and acquires the corresponding duration of the shared COT as a. Meanwhile, UE 2 acquires the start position t1 of the shared COT and the RB set corresponding to the shared COT as RB set 1 based on the time-frequency resource position of the WUS. That is, UE 2 finally determines that the shared COT corresponds to RB set 1 in the frequency domain and a duration a starting from t1 in the time domain. In a case where the CAPC of UE 2 is higher than or equal to the CAPC of the shared COT, as illustrated in FIG. 11, UE 2 performs a type-2A LBT procedure within the shared COT, and transmits a PSCCH and a PSSCH within the COT upon a successful LBT procedure.

Example 8

A first index, a corresponding CAPC, and a corresponding COT duration (as listed in Table 4) are configured in resource pool configuration of UE 1 and UE 2. It is assumed that a start position of the shared COT is an end position of transmission of the WUS, and an RB set corresponding to the shared COT is an RB set of the transmission of the WUS. It is assumed that the CAPC used by UE 1 in performing a type-1 LBT procedure is 0, and UE 1 generates a sequence of the WUS based on the first index 1, then upon receiving the WUS from UE 1, UE 2 acquires the first index 1, acquires the CAPC of the shared COT as 0 according to Table 4 in the resource pool configuration, and acquires the corresponding duration of the shared COT as b. Meanwhile, UE 2 acquires the start position t2 of the shared COT and the RB set corresponding to the shared COT as RB set 1 based on the time-frequency resource position of the WUS. That is, UE 2 finally determines that the shared COT corresponds to RB set 1 in the frequency domain and a duration b starting from t2 in the time domain. In a case where the CAPC of UE 2 is higher than or equal to the CAPC of the shared COT, as illustrated in FIG. 11, UE 2 performs a type-2A LBT procedure within the shared COT, and transmits a PSCCH and a PSSCH within the COT upon a successful LBT procedure.

Table 5

| First index | CAPC | COT duration | First offset |
|---|---|---|---|
| 0 | 0 | a | 0 |
| 1 | 0 | b | 0 |
| 2 | 1 | b | Duration from t1 to t2 |
| 3 | 1 | c | Duration from t1 to t2 |
| 4 | 2 | c | Duration from t1 to t3 |
| 5 | 3 | d | Duration from t1 to t3 |

Example 9

A first index, a corresponding CAPC, a corresponding COT duration, and a first offset (as listed in Table 5) are configured in resource pool configuration of UE 1 and UE 2. It is assumed that a start position of the shared COT is a start position of transmission of the WUS plus the first offset, and an RB set corresponding to the shared COT is an RB set of the transmission of the WUS. It is assumed that the CAPC used by UE 1 in performing a type-1 LBT procedure is 2, and UE 1 generates a sequence of the WUS based on the first index 4, then upon receiving the WUS from UE 1, UE 2 determines the first index 4, and determines the CAPC of the shared COT as 2, the duration of the shared COT as c, and the first offset of the shared COT as a duration from t1 to t3 according to Table 5 in the resource pool configuration. Meanwhile, upon receiving the WUS from UE 1, UE 2 acquires the start position tl of the transmission of the WUS based on the time-frequency resource position of the WUS, determines the start position t3 of the shared COT based on the acquired first offset, and acquires the RB set corresponding to the shared COT as RB set 1 based on the time-frequency resource position of the WUS. That is, UE 2 finally determines that the shared COT corresponds to RB set 1 in the frequency domain and a duration c starting from t3 in the time domain. In a case where the CAPC of UE 2 is higher than or equal to the CAPC of the shared COT, as illustrated in FIG. 11, UE 2 performs a type-2A LBT procedure within the shared COT, and transmits a PSCCH and a PSSCH within the COT upon a successful LBT procedure.

For the process of generating the first sequence based on the CAPC or the first index, reference may be made to the related formulas in the above embodiments.

In the above embodiments, UE 1 shares the COT with UE 2 via the WUS. UE 2 transmits the PSCCH and/or the PSSCH within the shared COT via a type-2 LBT procedure. The receiver of the PSCCH and/or PSSCH includes UE 1. In addition, in the above embodiments, UE 1 shares the COT with UE 2 via the WUS. UE 2 further transmits the PSFCH (that is, PSCCH and PSSCH resources in FIG. 11 are replaced with a PSFCH resource) within the shared COT via a type-2 LBT procedure. The PSFCH is configured to transmit hybrid automatic repeat request (HARQ) feedback information from UE 2 to UE 1. In some embodiments, the HARQ feedback information is used to indicate whether UE 2 successfully receives the WUS from UE 1. In some embodiments, the HARQ feedback information is used to indicate whether UE 2 successfully receives data from UE 1 upon being awakened by tahe WUS.

The method for SL communication according to the embodiments of the present disclosure is a method where the COT is shared based on the sequence, such that the utilization efficiency of the COT and the resource utilization rate in the SL communication system are improved, and contention for the unlicensed channel with other system (for example, the Wi-Fi system) is facilitated.

FIG. 12 is a schematic block diagram of a first device 1200 according to some embodiments of the present disclosure. The first terminal 1200 includes:

a transmitting unit 1201, configured to transmit first information upon accessing a channel via an LBT procedure, that is, upon a successful LBT procedure, wherein the first information is used to indicate COT sharing information.

In some embodiments, the first information is a first sequence.

In some embodiments, the first information is a WUS.

In some embodiments, the first information is transmitted within a COT acquired by the first terminal upon accessing the channel via the LBT procedure.

In some embodiments, a resource carrying the first information includes a PSCCH resource and/or a PSFCH resource.

In some embodiments, the COT sharing information indicated by the first information includes at least one of a CAPC, a COT duration, a COT start position, or information of a COT resource.

In some embodiments, the CAPC includes a CAPC for transmitting a first sequence or a CAPC for the LBT procedure used in transmitting a first sequence by the first terminal.

In some embodiments, the CAPC is configured by a network, preconfigured, or predefined in a protocol.

In some embodiments, the CAPC is carried in resource pool configuration or SL BWP configuration.

In some embodiments, the CAPC is configured to generate a phase, a phase shift, or a cyclic shift of a first sequence.

In some embodiments, a mapping is present between a first index and the CAPC.

In some embodiments, the mapping between the first index and the CAPC is configured by a network, preconfigured, or predefined in a protocol.

In some embodiments, the mapping between the first index and the CAPC is carried in resource pool configuration or SL BWP configuration.

In some embodiments, the first index is an index of a WUS.

In some embodiments, the first index corresponding to the CAPC is configured to generate a phase, a phase shift, or a cyclic shift of a first sequence.

In some embodiments, the COT duration includes a COT duration acquired by the first terminal upon accessing the channel via the LBT procedure, a remaining COT duration or a COT duration usable by a second terminal upon information transmission by the first terminal accessed the channel via the LBT procedure.

In some embodiments, the COT duration is configured by a network, preconfigured, or predefined in a protocol.

In some embodiments, the COT duration is carried in resource pool configuration or SL BWP configuration.

In some embodiments, a mapping is present between the CAPC and the COT duration.

In some embodiments, the mapping between the CAPC and the COT duration is configured by a network, preconfigured, or predefined in a protocol.

In some embodiments, the mapping between the CAPC and the COT duration is carried in resource pool configuration or SL bandwidth part (BWP) configuration.

In some embodiments, a mapping is present between a first index and the COT duration.

In some embodiments, the mapping between the first index and the COT duration is configured by a network, preconfigured, or predefined in a protocol.

In some embodiments, the mapping between the first index and the COT duration is carried in resource pool configuration or SL bandwidth part (BWP) configuration.

In some embodiments, the first index corresponding to the COT duration is configured to generate a first sequence, for example, a phase, a phase shift, or a cyclic shift of the first sequence.

In some embodiments, the COT start position is determined based on a time-domain position of transmission of a first sequence or a time-domain position of a resource carrying a first sequence.

In some embodiments, the COT start position includes at least one of a time-domain start position of the transmission of the first sequence or a time-domain end position of the transmission of the first sequence.

In some embodiments, the COT start position is determined based at least one of a time-domain start position of the transmission of the first sequence, a time-domain end position of the transmission of the first sequence, or a first offset of the transmission of the first sequence.

In some embodiments, the first offset is configured by a network, preconfigured, or predefined in a protocol.

In some embodiments, the first offset is configured to generate a phase, a phase shift, or a cyclic shift of the first sequence.

In some embodiments, a mapping is present between a first index and the first offset.

In some embodiments, the mapping between the first index and the first offset is configured by a network, preconfigured, or predefined in a protocol.

In some embodiments, the mapping between the first index and the first offset is carried in resource pool configuration or SL BWP configuration.

In some embodiments, the first index corresponding to the first offset is configured to generate a phase, a phase shift, or a cyclic shift of a first sequence.

In some embodiments, the information of the COT RB set is determined based on an RB set corresponding to transmission of a first sequence.

In some embodiments, the COT RB set is an RB set for the transmission of the first sequence.

In some embodiments, a parameter for generating a first sequence includes at least one of the CAPC, a first index, a first offset, a sequence length, a sequence index, a sequence group index, a random integer, or a random sequence.

The first terminal 1200 in the embodiments of the present disclosure may achieve the corresponding functions of the first terminal in the method embodiments. For processes, functions, implementation methods, and technical effects corresponding to various modules (sub-modules, units, assemblies, and the like) in the first terminal 1200, reference may be made to the corresponding descriptions in the method embodiments, which are not be described herein any further. It should be noted that the functions of various modules (sub-modules, units, assemblies, and the like) in the first terminal 1200 according to the embodiments of the present disclosure may be achieved by different modules (sub-modules, units, assemblies, and the like) or by the same module (sub-module, unit, assembly, and the like).

FIG. 13 is a schematic block diagram of a second device 1300 according to some embodiments of the present disclosure. The second terminal 1300 includes:

a receiving unit 1301, configured to receive first information, wherein the first information is used to indicate COT information; and
a processing unit 1302, configured to perform channel access based on the COT information acquired from the first information.

In some embodiments, the first information is a first sequence.

In some embodiments, the first information is a WUS.

In some embodiments, the first information is transmitted within a COT acquired by a first terminal upon accessing a channel via an LBT procedure, that is, upon a successful LBT procedure.

In some embodiments, a resource carrying the first information includes at least one of a PSCCH resource or a PSFCH resource.

In some embodiments, COT sharing information indicated by the first information includes at least one of a CAPC, a COT duration, a COT start position, or information of a COT RB set.

In some embodiments, the CAPC includes a CAPC for transmitting a first sequence or a CAPC for the LBT procedure used in transmitting a first sequence by a first terminal.

In some embodiments, the CAPC is configured by a network, preconfigured, or predefined in a protocol.

In some embodiments, the CAPC is carried in resource pool configuration or SL BWP configuration.

In some embodiments, the CAPC is configured to generate a phase, a phase shift, or a cyclic shift of a first sequence.

In some embodiments, a mapping is present between a first index and the CAPC.

In some embodiments, the mapping between the first index and the CAPC is configured by a network, preconfigured, or predefined in a protocol.

In some embodiments, the mapping between the first index and the CAPC is carried in resource pool configuration or SL bandwidth part (BWP) configuration.

In some embodiments, the first index is an index of a WUS.

In some embodiments, the first index corresponding to the CAPC is configured to generate a phase, a phase shift, or a cyclic shift of a first sequence.

In some embodiments, the COT duration includes a COT duration acquired by a first terminal upon accessing a channel via the LBT procedure, a remaining COT duration or a COT duration usable by the second terminal upon information transmission by a first terminal that accesses a channel via the LBT procedure.

In some embodiments, the COT duration is configured by a network, preconfigured, or predefined in a protocol.

In some embodiments, the COT duration is carried in resource pool configuration or SL BWP configuration.

In some embodiments, a mapping is present between the CAPC and the COT duration.

In some embodiments, the mapping between the CAPC and the COT duration is configured by a network, preconfigured, or predefined in a protocol.

In some embodiments, the mapping between the CAPC and the COT duration is carried in resource pool configuration or SL BWP configuration.

In some embodiments, a mapping is present between a first index and the COT duration.

In some embodiments, the mapping between the first index and the COT duration is configured by a network, preconfigured, or predefined in a protocol.

In some embodiments, the mapping between the first index and the COT duration is carried in resource pool configuration or SL BWP configuration.

In some embodiments, the first index corresponding to the COT duration is configured to generate a phase, a phase shift, or a cyclic shift of a first sequence.

In some embodiments, the COT start position is determined based on a time-domain position of transmission of a first sequence or a time-domain position of a resource carrying a first sequence.

In some embodiments, the COT start position includes a time-domain start position of the transmission of the first sequence or a time-domain end position of the transmission of the first sequence.

In some embodiments, the COT start position is determined based at least one of a time-domain start position of the transmission of the first sequence, a time-domain end position of the transmission of the first sequence, or a first offset of the transmission of the first sequence.

In some embodiments, the first offset is configured by a network, preconfigured, or predefined in a protocol.

In some embodiments, the first offset is configured to generate a phase, a phase shift, or a cyclic shift of the first sequence.

In some embodiments, a mapping is present between a first index and the first offset.

In some embodiments, the mapping between the first index and the first offset is configured by a network, preconfigured, or predefined in a protocol.

In some embodiments, the mapping between the first index and the first offset is carried in resource pool configuration or SL BWP configuration.

In some embodiments, the first index corresponding to the first offset is configured to generate a phase, a phase shift, or a cyclic shift of a first sequence.

In some embodiments, the information of the COT RB set is determined based on an RB set corresponding to transmission of a first sequence.

In some embodiments, the COT RB set is an RB set for the transmission of the first sequence.

In some embodiments, the processing unit 1302 is further configured to perform an LBT procedure within the acquired COT.

In some embodiments, the processing unit 1302 is further configured to perform the LBT procedure within the acquired COT in a case where a CAPC of the second terminal is higher than or equal to a CAPC shared by the COT.

In some embodiments, the processing unit 1302 is further configured to transmit at least one of a PSCCH, a PSSCH, a PSFCH, or an SSB upon accessing a channel via the LBT procedure.

In some embodiments, a parameter for generating a first sequence includes at least one of the CAPC, a first index, a first offset, a sequence length, a sequence index, a sequence group index, a random integer, or a random sequence.

The second terminal 1300 in the embodiments of the present disclosure may achieve the corresponding functions of the second terminal in the method embodiments. For processes, functions, implementation methods, and technical effects corresponding to various modules (sub-modules, units, assemblies, and the like) in the second terminal 1300, reference may be made to the corresponding descriptions in the method embodiments, which are not be described herein any further. It should be noted that the functions of various modules (sub-modules, units, assemblies, and the like) in the second terminal 1300 according to the embodiments of the present disclosure may be achieved by different modules (sub-modules, units, assemblies, and the like) or by the same module (sub-module, unit, assembly, and the like).

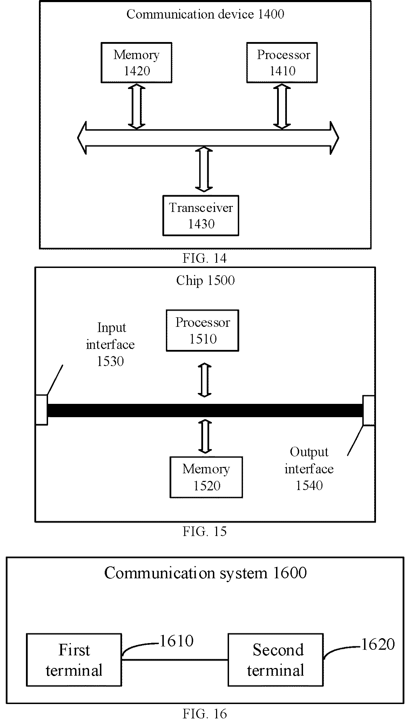

FIG. 14 is a schematic structural diagram of a communication device 1400 according to some embodiments of the present disclosure. The communication device 1400 includes a processor 1410. The processor 1410 is configured to call and run one or more computer programs in a memory to cause the communication device 1400 to perform the methods according to the embodiments of the present disclosure.

In some embodiments, the communication device 1400 further includes a memory 1420. The processor 1410 is configured to call and run one or more computer programs in the memory 1420 to cause the communication device 1400 to perform the methods according to the embodiments of the present disclosure.

The memory 1420 is a device independent of the processor 1410, or is integrated in the processor 1410.

In some embodiments, the communication device 1400 further includes a transceiver 1430. The processor 1410 may control communication of the transceiver 1430 with other devices. In particular, the transceiver 1430 transmits information or data to other devices, or receives information or data from other devices.

The transceiver 1430 includes a transiter and a receiver. The transceiver 1430 further includes one or more antennas.

In some embodiments, the communication device 1400 is the network device in the embodiments of the present disclosure, and performs the corresponding processes performed by the network device in the methods according to the embodiments of the present disclosure, which are not described herein any further for brevity.

In some embodiments, the communication device 1000 is the terminal device in the embodiments of the present disclosure, and performs the corresponding processes performed by the terminal device in the methods according to the embodiments of the present disclosure, which are not described herein any further for brevity.

FIG. 15 is a schematic block diagram of a chip 1500 according to some embodiments of the present disclosure. The chip 1500 includes a processor 1510. The processor 1510 is configured to call and run one or more computer programs in a memory to perform the methods according to the embodiments of the present disclosure.

In some embodiments, the chip 1500 further includes a memory 1520. The processor 1510 is configured to call and run one or more computer programs in the memory 1520 to perform the methods according to the embodiments of the present disclosure.

The memory 1520 is a device independent of the processor 1510, or is integrated in the processor 1510.

In some embodiments, the chip 1500 further includes an input interface 1530. The processor 1510 may control communication of the input interface 1530 with other devices. In particular, the input interface 1530 acquires information or data from other devices.

In some embodiments, the chip 1500 further includes an output interface 1540. The processor 1510 may control communication of the output interface 1540 with other devices. In particular, the output interface 1540 transmits information or data to other devices.

In some embodiments, the chip 1500 is applicable to the network device in the embodiments of the present disclosure, and performs the corresponding processes performed by the network device in the methods according to the embodiments of the present disclosure, which are not described herein any further for brevity.

In some embodiments, the chip 1100 is applicable to the terminal device in the embodiments of the present disclosure, and performs the corresponding processes performed by the terminal device in the methods according to the embodiments of the present disclosure, which are not described herein any further for brevity.

The chips applicable to the network device and the terminal device may be the same chip or different chips.

It should be understood that the chip in the embodiments of the present disclosure may also referred to as a system-level chip, a system chip, a chip system, a system-on-chip, or the like.

The processor is a general processor, a digital signal processor (DSP), a field-programmable gate array (FPGA), an application-specific integrated circuit (ASIC), any other programmable logic device, transistor logic device, or discrete hardware assembly. The general processor is a microprocessor, any conventional processor, or the like.

The memory in embodiments of the present disclosure may be a volatile or non-volatile memory, or include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory is a random-access memory (RAM).

It should be understood that the memory is exemplary but not for limitation. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), or the like. That is, the memory in the embodiments of the present disclosure is intend to include, but not limit to these and any other suitable type of memory.

FIG. 16 is a schematic block diagram of a communication system 1600 according to some embodiments of the present disclosure. The communication system 1600 includes a first terminal 1610 and a second terminal 1620.

The first terminal 1610 is configured to transmit first information upon accessing a channel via an LBT procedure, wherein the first information is used to indicate COT sharing information.

The second terminal 1620 is configured to receive first information, wherein the first information is used to indicate COT information; and perform channel access based on the COT information acquired from the first information.

The terminal device 1610 is configured to implement the corresponding functions implemented by the terminal device in the above methods and the corresponding functions implemented by the network device in the above methods, which are not described herein any further for brevity.

All or part of the above embodiments may be practiced by software, hardware, firmware, or any combination thereof. When practiced by the software, all or part of the above embodiments are practiced in the form of a computer program product. The computer program product includes one or more computer instructions. When the one or more computer program instruction are loaded and executed on a computer, all or part of the processes or functions according to the embodiments of the present disclosure are achieved. The computer is a general computer, a special-purpose computer, a computer network, or other programmable devices. The computer instructions are stored in a computer-readable storage medium or are transmitted from a computer-readable storage medium to another computer-readable storage medium. For example, the computer instructions are transmitted from a web site, a computer, a server, or a data center to another website, another computer, another server, or another data center by a wired mode (for example, a coaxial cable, an optical fiber, a digital subscriber line (DSL) or a wireless mode (for example, infrared, wireless, microwave, and the like) transmission. The computer-readable storage medium is any available medium that the computer can access or a data storage device, for example, a server, a data center, which contains one or more integrated available mediums. The available medium is a magnetic medium (for example, a floppy disk, a hard disk, a tape), an optical medium (for example, a DVD), or a semiconductor medium (for example, a solid state disk (SSD)).

It should be understood that in the embodiments of the present disclosure, the order of the processes does not imply any sequence of the processes. The order of the processes should be determined based on the function and internal logic, and should not impose any limitations on the implementation process of the embodiments of the present disclosure.

It should be understood by those skilled in the art that for the specific operation processes of the system, device, and unit described above, reference may be made to the corresponding processes in the embodiments of the method for convenience and simplicity of description, which are not repeated herein for convenience and brevity.

Described above are merely specific embodiments of the present disclosure, and the scope of protection of the present disclosure is not limited. Any changes or replacements made within the technical scope of the present disclosure by those skilled in the art should be encompassed within the scope of protection of the present disclosure. thus, the scope of protection of the present disclosure shall prevail in the scope of protection of the claims.

**Claims**

1. A method for sidelink (SL) communication, performed by a first terminal, the method comprising:
   transmitting first information upon accessing a channel via a listen-before-talk (LBT) procedure, wherein the first information is used to indicate channel occupancy time (COT) sharing information.

2. The method according to claim 1, wherein the first information is a first sequence.

3. The method according to claim 1 or 2, wherein the first information is a wake-up signal (WUS).

4. The method according to any one of claims 1 to 3, wherein the first information is transmitted within a COT acquired by the first terminal upon accessing the channel via the LBT procedure.

5. The method according to any one of claims 1 to 4, wherein a resource carrying the first information comprises at least one of a physical sidelink control channel (PSCCH) resource or a physical sidelink feedback channel (PSFCH) resource.

6. The method according to any one of claims 1 to 5, wherein the COT sharing information indicated by the first information comprises at least one of a channel access priority class (CAPC), a COT duration, a COT start position, or information of a COT resource block (RB) set.

7. The method according to claim 6, wherein the CAPC comprises a CAPC for transmitting a first sequence or a CAPC for the LBT procedure used in transmitting a first sequence by the first terminal.

8. The method according to claim 6 or 7, wherein the CAPC is configured by a network, preconfigured, or predefined in a protocol.

9. The method according to any one of claims 6 to 8, wherein the CAPC is carried in resource pool configuration or SL bandwidth part (BWP) configuration.

10. The method according to any one of claims 6 to 9, wherein the CAPC is configured to generate a phase, a phase shift, or a cyclic shift of a first sequence.

11. The method according to any one of claims 6 to 10, wherein a mapping is present between a first index and the CAPC.

12. The method according to claim 11, wherein the mapping between the first index and the CAPC is configured by a network, preconfigured, or predefined in a protocol.

13. The method according to claim 11 or 12, wherein the mapping between the first index and the CAPC is carried in resource pool configuration or SL bandwidth part (BWP) configuration.

14. The method according to any one of claims 11 to 13, wherein the first index is an index of a wake-up signal (WUS).

15. The method according to any one of claims 6 to 14, wherein the COT duration comprises a COT duration acquired by the first terminal upon accessing the channel via the LBT procedure, a remaining COT duration or a COT duration usable by a second terminal upon information transmission by the first terminal accessed the channel via the LBT procedure.

16. The method according to any one of claims 6 to 15, wherein the COT duration is configured by a network, preconfigured, or predefined in a protocol.

17. The method according to any one of claims 6 to 16, wherein the COT duration is carried in resource pool configuration or SL bandwidth part (BWP) configuration.

18. The method according to any one of claims 6 to 17, wherein a mapping is present between the CAPC and the COT duration.

19. The method according to claim 18, wherein the mapping between the CAPC and the COT duration is configured by a network, preconfigured, or predefined in a protocol.

20. The method according to claim 18 or 19, wherein the mapping between the CAPC and the COT duration is carried in resource pool configuration or SL bandwidth part (BWP) configuration.

21. The method according to any one of claims 6 to 20, wherein a mapping is present between a first index and the COT duration.

22. The method according to claim 21, wherein the mapping between the first index and the COT duration is configured by a network, preconfigured, or predefined in a protocol.

23. The method according to claim 21 or 22, wherein the mapping between the first index and the COT duration is carried in resource pool configuration or SL bandwidth part (BWP) configuration.

24. The method according to any one of claims 6 to 23, wherein the COT start position is determined based on a time-domain position of transmission of a first sequence or a time-domain position of a resource carrying a first sequence.

25. The method according to claim 24, wherein the COT start position comprises at least one of a time-domain start position the transmission of the first sequence or a time-domain end position of the transmission of the first sequence.

26. The method according to claim 24, wherein the COT start position is determined based at least one of a time-domain start position of the transmission of the first sequence, a time-domain end position of the transmission of the first sequence, or a first offset of the transmission of the first sequence.

27. The method according to claim 26, wherein the first offset is configured by a network, preconfigured, or predefined in a protocol.

28. The method according to claim 26 or 27, wherein the first offset is configured to generate a phase, a phase shift, or a cyclic shift of the first sequence.

29. The method according to any one of claims 26 to 28, wherein a mapping is present between a first index and the first offset.

30. The method according to claim 29, wherein the mapping between the first index and the first offset is configured by a network, preconfigured, or predefined in a protocol.

31. The method according to claim 29 or 30, wherein the mapping between the first index and the first offset is carried in resource pool configuration or SL bandwidth part (BWP) configuration.

32. The method according to any one of claims 11 to 14, 21 to 23, or 29 to 31, wherein the first index is configured to generate a phase, a phase shift, or a cyclic shift of a first sequence.

33. The method according to any one of claims 6 to 32, wherein the information of the COT RB set is determined based on an RB set corresponding to transmission of a first sequence.

34. The method according to claim 33, wherein the COT RB set is an RB set for the transmission of the first sequence.

35. The method according to any one of claims 6 to 34, wherein a parameter for generating a first sequence comprises at least one of the CAPC, a first index, a first offset, a sequence length, a sequence index, a sequence group index, a random integer, or a random sequence.

36. A method for sidelink (SL) communication, performed by a second terminal, the method comprising:

receiving first information, wherein the first information is used to indicate channel occupancy time (COT) information; and
performing channel access based on the COT information acquired from the first information.

37. The method according to claim 36, wherein the first information is a first sequence.

38. The method according to claim 36 or 37, wherein the first information is a wake-up signal (WUS).

39. The method according to any one of claims 36 to 38, wherein the first information is transmitted within a COT acquired by a first terminal upon accessing a channel via a listen-before-talk (LBT) procedure.

40. The method according to any one of claims 36 to 39, wherein a resource carrying the first information comprises at least one of a physical sidelink control channel (PSCCH) resource or a physical sidelink feedback channel (PSFCH) resource.

41. The method according to any one of claims 36 to 40, wherein COT sharing information indicated by the first information comprises at least one of a channel access priority class (CAPC), a COT duration, a COT start position, or information of a COT resource block (RB) set.

42. The method according to claim 41, wherein the CAPC comprises a CAPC for transmitting a first sequence or a CAPC for a listen-before-talk (LBT) procedure used in transmitting a first sequence by a first terminal.

43. The method according to claim 41 or 42, wherein the CAPC is configured by a network, preconfigured, or predefined in a protocol.

44. The method according to any one of claims 41 to 43, wherein the CAPC is carried in resource pool configuration or SL bandwidth part (BWP) configuration.

45. The method according to any one of claims 41 to 44, wherein the CAPC is configured to generate a phase, a phase shift, or a cyclic shift of a first sequence.

46. The method according to any one of claims 41 to 45, wherein a mapping is present between a first index and the CAPC.

47. The method according to claim 46, wherein the mapping between the first index and the CAPC is configured by a network, preconfigured, or predefined in a protocol.

48. The method according to claim 46 or 47, wherein the mapping between the first index and the CAPC is carried in resource pool configuration or SL bandwidth part (BWP) configuration.

49. The method according to any one of claims 46 to 48, wherein the first index is an index of a wake-up signal (WUS).

50. The method according to any one of claims 41 to 49, wherein the COT duration comprises a COT duration acquired by a first terminal upon accessing a channel via a listen-before-talk (LBT) procedure, a remaining COT duration or a COT duration usable by the second terminal upon information transmission by a first terminal that accesses a channel via the LBT procedure.

51. The method according to any one of claims 41 to 50, wherein the COT duration is configured by a network, preconfigured, or predefined in a protocol.

52. The method according to any one of claims 41 to 51, wherein the COT duration is carried in resource pool configuration or SL bandwidth part (BWP) configuration.

53. The method according to any one of claims 41 to 52, wherein a mapping is present between the CAPC and the COT duration.

54. The method according to claim 53, wherein the mapping between the CAPC and the COT duration is configured by a network, preconfigured, or predefined in a protocol.

55. The method according to claim 53 or 54, wherein the mapping between the CAPC and the COT duration is carried in resource pool configuration or SL bandwidth part (BWP) configuration.

56. The method according to any one of claims 41 to 55, wherein a mapping is present between a first index and the COT duration.

57. The method according to claim 56, wherein the mapping between the first index and the COT duration is configured by a network, preconfigured, or predefined in a protocol.

58. The method according to claim 56 or 57, wherein the mapping between the first index and the COT duration is carried in resource pool configuration or SL bandwidth part (BWP) configuration.

59. The method according to any one of claims 41 to 58, wherein the COT start position is determined based on a time-domain position of transmission of a first sequence or a time-domain position of a resource carrying a first sequence.

60. The method according to claim 59, wherein the COT start position comprises at least one of a time-domain start position of the transmission of the first sequence or a time-domain end position of the transmission of the first sequence.

61. The method according to claim 59, wherein the COT start position is determined based at least one of a time-domain start position of the transmission of the first sequence, a time-domain end position of the transmission of the first sequence, or a first offset of the transmission of the first sequence.

62. The method according to claim 61, wherein the first offset is configured by a network, preconfigured, or predefined in a protocol.

63. The method according to claim 61 or 62, wherein the first offset is configured to generate a phase, a phase shift, or a cyclic shift of the first sequence.

64. The method according to any one of claims 61 to 63, wherein a mapping is present between a first index and the first offset.

65. The method according to claim 64, wherein the mapping between the first index and the first offset is configured by a network, preconfigured, or predefined in a protocol.

66. The method according to claim 64 or 65, wherein the mapping between the first index and the first offset is carried in resource pool configuration or SL bandwidth part (BWP) configuration.

67. The method according to any one of claims 46 to 49, 56 to 58, or 64 to 66, wherein the first index is configured to generate a phase, a phase shift, or a cyclic shift of a first sequence.

68. The method according to any one of claims 41 to 67, wherein the information of the COT RB set is determined based on an RB set corresponding to transmission of a first sequence.

69. The method according to claim 68, wherein the COT RB set is an RB set for the transmission of the first sequence.

70. The method according to any one of claims 41 to 69, wherein a parameter for generating a first sequence comprises at least one of the CAPC, a first index, a first offset, a sequence length, a sequence index, a sequence group index, a random integer, or a random sequence.

71. The method according to any one of claims 36 to 70, wherein performing the channel access based on the COT information acquired from the first information comprises:
performing a listen-before-talk (LBT) procedure within the acquired COT.

72. The method according to claim 71, wherein performing the LBT procedure within the acquired COT comprises:
performing the LBT procedure within the acquired COT in a case where a channel access priority class (CAPC) of the second terminal is higher than or equal to a CAPC shared by the COT.

73. The method according to claim 71 or 72, wherein performing the channel access based on the COT information acquired from the first information comprises:
transmitting at least one of a physical sidelink control channel (PSCCH), a physical sidelink shared channel (PSSCH), a physical sidelink feedback channel (PSFCH), or a synchronization signals and physical broadcast channel block (SSB) upon accessing a channel via the LBT procedure.

74. A first terminal, comprising:
a transmitting unit, configured to transmit first information upon accessing a channel via a listen-before-talk (LBT) procedure, wherein the first information is used to indicate channel occupancy time (COT) sharing information.

75. The first terminal according to claim 74, wherein the first information is a first sequence.

76. The first terminal according to claim 74 or 75, wherein the first information is a wake-up signal (WUS).

77. The first terminal according to any one of claims 74 to 76, wherein the first information is transmitted within a COT acquired by the first terminal upon accessing the channel via the LBT procedure.

78. The first terminal according to any one of claims 74 to 77, wherein a resource carrying the first information comprises at least one of a physical sidelink control channel (PSCCH) resource or a physical sidelink feedback channel (PSFCH) resource.

79. The first terminal according to any one of claims 74 to 78, wherein the COT sharing information indicated by the first information comprises at least one of a channel access priority class (CAPC), a COT duration, a COT start position, or information of a COT resource block (RB) set.

80. The first terminal according to claim 79, wherein the CAPC comprises a CAPC for transmitting a first sequence or a CAPC for the LBT procedure used in transmitting a first sequence by the first terminal.

81. The first terminal according to claim 79 or 80, wherein the CAPC is configured by a network, preconfigured, or predefined in a protocol.

82. The first terminal according to any one of claims 79 to 81, wherein the CAPC is carried in resource pool configuration or SL bandwidth part (BWP) configuration.

83. The first terminal according to any one of claims 79 to 82, wherein the CAPC is configured to generate a phase, a phase shift, or a cyclic shift of a first sequence.

84. The first terminal according to any one of claims 79 to 83, wherein a mapping is present between a first index and the CAPC.

85. The first terminal according to claim 84, wherein the mapping between the first index and the CAPC is configured by a network, preconfigured, or predefined in a protocol.

86. The first terminal according to claim 84 or 85, wherein the mapping between the first index and the CAPC is carried in resource pool configuration or SL bandwidth part (BWP) configuration.

87. The first terminal according to any one of claims 84 to 86, wherein the first index is an index of a wake-up signal (WUS).

88. The first terminal according to any one of claims 79 to 87, wherein the COT duration comprises a COT duration acquired by the first terminal upon accessing the channel via the LBT procedure, a remaining COT duration or a COT duration usable by a second terminal upon information transmission by the first terminal accessed the channel via the LBT procedure.

89. The first terminal according to any one of claims 79 to 88, wherein the COT duration is configured by a network, preconfigured, or predefined in a protocol.

90. The first terminal according to any one of claims 79 to 89, wherein the COT duration is carried in resource pool configuration or SL bandwidth part (BWP) configuration.

91. The first terminal according to any one of claims 79 to 90, wherein a mapping is present between the CAPC and the COT duration.

92. The first terminal according to claim 91, wherein the mapping between the CAPC and the COT duration is configured by a network, preconfigured, or predefined in a protocol.

93. The first terminal according to claim 91 or 92, wherein the mapping between the CAPC and the COT duration is carried in resource pool configuration or SL bandwidth part (BWP) configuration.

94. The first terminal according to any one of claims 79 to 93, wherein a mapping is present between a first index and the COT duration.

95. The first terminal according to claim 94, wherein the mapping between the first index and the COT duration is configured by a network, preconfigured, or predefined in a protocol.

96. The first terminal according to claim 94 or 95, wherein the mapping between the first index and the COT duration is carried in resource pool configuration or SL bandwidth part (BWP) configuration.

97. The first terminal according to any one of claims 79 to 96, wherein the COT start position is determined based on a time-domain position of transmission of a first sequence or a time-domain position of a resource carrying a first sequence.

98. The first terminal according to claim 97, wherein the COT start position comprises at least one of a time-domain start position of the transmission of the first sequence or a time-domain end position of the transmission of the first sequence.

99. The first terminal according to claim 97, wherein the COT start position is determined based at least one of a time-domain start position of the transmission of the first sequence, a time-domain end position of the transmission of the first sequence, or a first offset of the transmission of the first sequence.

100.
The first terminal according to claim 99, wherein the first offset is configured by a network, preconfigured, or predefined in a protocol.

101.
The first terminal according to claim 99 or 100, wherein the first offset is configured to generate a phase, a phase shift, or a cyclic shift of the first sequence.

102.
The first terminal according to any one of claims 99 to 101, wherein a mapping is present between a first index and the first offset.

103.
The first terminal according to claim 102, wherein the mapping between the first index and the first offset is configured by a network, preconfigured, or predefined in a protocol.

**104.**

The first terminal according to claim 102 or 103, wherein the mapping between the first index and the first offset is carried in resource pool configuration or SL bandwidth part (BWP) configuration.

**105.**

The first terminal according to any one of claims 87 to 87, 94 to 96, or 102 to 104, wherein the first index is configured to generate a phase, a phase shift, or a cyclic shift of a first sequence.

**106.**

The first terminal according to any one of claims 79 to 105, wherein the information of the COT RB set is determined based on an RB set corresponding to transmission of a first sequence.

**107.**

The first terminal according to claim 106, wherein the COT RB set is an RB set for the transmission of the first sequence.

**108.**

The first terminal according to any one of claims 79 to 107, wherein a parameter for generating a first sequence comprises at least one of the CAPC, a first index, a first offset, a sequence length, a sequence index, a sequence group index, a random integer, or a random sequence.

**109.**

A second terminal, comprising:

> a receiving unit, configured to receive first information, wherein the first information is used to indicate channel occupancy time (COT) information; and
> a processing unit, configured to perform channel access based on the COT information acquired from the first information.

**110.**

The second terminal according to claim 109, wherein the first information is a first sequence.

**111.** The second terminal according to claim 109 or 110, wherein the first information is a wake-up signal (WUS).

**112.**

The second terminal according to any one of claims 109 to 111, wherein the first information is transmitted within a COT acquired by a first terminal upon accessing a channel via listen-before-talk (LBT) procedure.

**113.**

The second terminal according to any one of claims 109 to 111, wherein a resource carrying the first information comprises at least one of a physical sidelink control channel (PSCCH) resource or a physical sidelink feedback channel (PSFCH) resource.

**114.**

The second terminal according to any one of claims 109 to 113, wherein COT sharing information indicated by the first information comprises at least one of a channel access priority class (CAPC), a COT duration, a COT start position, or information of a COT resource block (RB) set.

**115.**

The second terminal according to claim 114, wherein the CAPC comprises a CAPC for transmitting a first sequence or a CAPC for a listen-before-talk (LBT) procedure used in transmitting a first sequence by a first terminal.

**116.**

The second terminal according to claim 114 or 115, wherein the CAPC is configured by a network, preconfigured, or predefined in a protocol.

**117.**

The second terminal according to any one of claims 114 to 116, wherein the CAPC is carried in resource pool configuration or SL bandwidth part (BWP) configuration.

**118.**

The second terminal according to any one of claims 114 to 117, wherein the CAPC is configured to generate a phase, a phase shift, or a cyclic shift of a first sequence.

**119.**

The second terminal according to any one of claims 114 to 118, wherein a mapping between a first index and the CAPC.

**120.**

The second terminal according to claim 119, wherein the mapping between the first index and the CAPC is configured by a network, preconfigured, or predefined in a protocol.

**121.**

The second terminal according to claim 119 or 120, wherein the mapping between the first index and the CAPC is carried in resource pool configuration or SL bandwidth part (BWP) configuration.

**122.**

The second terminal according to any one of claims 119 to 121, wherein the first index is an index of a wake-up signal (WUS).

**123.**

The second terminal according to any one of claims 114 to 122, wherein the COT duration comprises a COT duration acquired by a first terminal upon accessing a channel via a listen-before-talk (LBT) procedure, a remaining COT duration or a COT duration usable by the second terminal upon information transmission by a first terminal accessed a channel via the LBT procedure.

**124.**

The second terminal according to any one of claims 114 to 123, wherein the COT duration is configured by a network, preconfigured, or predefined in a protocol.

**125.**

The second terminal according to any one of claims 114 to 124, wherein the COT duration is carried in resource pool configuration or SL bandwidth part (BWP) configuration.

**126.**

The second terminal according to any one of claims 114 to 125, wherein a mapping is present between the CAPC and the COT duration.

**127.**

The second terminal according to claim 126, wherein the mapping between the CAPC and the COT duration is configured by a network, preconfigured, or predefined in a protocol.

**128.**

The second terminal according to claim 126 or 127, wherein the mapping between the CAPC and the COT duration is carried in resource pool configuration or SL bandwidth part (BWP) configuration.

**129.**

The second terminal according to any one of claims 114 to 128, wherein a mapping is present between a first index and the COT duration.

**130.**

The second terminal according to claim 129, wherein the mapping between the first index and the COT duration is configured by a network, preconfigured, or predefined in a protocol.

**131.**

The second terminal according to claim 129 or 130, wherein the mapping between the first index and the COT duration is carried in resource pool configuration or SL bandwidth part (BWP) configuration.

**132.**

The second terminal according to any one of claims 114 to 131, wherein the COT start position is determined based on a time-domain position of transmission of a first sequence or a time-domain position of a resource carrying a first sequence.

**133.**

The second terminal according to claim 132, wherein the COT start position comprises at least one of a time-domain start position of the transmission of the first sequence or a time-domain end position of the transmission of the first sequence.

**134.**

The second terminal according to claim 132, wherein the COT start position is determined based at least one of a time-domain start position of the transmission of the first sequence, a time-domain end position of the transmission of the first sequence, or a first offset of the transmission of the first sequence.

**135.**

The second terminal according to claim 134, wherein the first offset is configured by a network, preconfigured, or predefined in a protocol.

**136.**

The second terminal according to claim 134 or 135, wherein the first offset is configured to generate a phase, a phase shift, or a cyclic shift of the first sequence.

**137.**

The second terminal according to any one of claims 134 to 136, wherein a mapping is present between a first index and the first offset.

**138.**

The second terminal according to claim 137, wherein the mapping between the first index and the first offset is configured by a network, preconfigured, or predefined in a protocol.

**139.**

The second terminal according to claim 137 or 138, wherein the mapping between the first index and the first offset is carried in resource pool configuration or SL bandwidth part (BWP) configuration.

**140.**

The second terminal according to any one of claims 119 to 122, 129 to 131, or 137 to 139, wherein the first index is configured to generate a phase, a phase shift, or a cyclic shift of a first sequence.

**141.**

The second terminal according to any one of claims 114 to 140, wherein the information of the COT RB set is determined based on an RB set corresponding to transmission of a first sequence.

**142.**

The second terminal according to claim 141, wherein the COT RB set is an RB set for the transmission of the first sequence.

**143.**

The second terminal according to any one of claims 114 to 142, wherein a parameter for generating a first sequence comprises at least one of the CAPC, a first index, a first offset, a sequence length, a sequence index, a sequence group index, a random integer, or a random sequence.

**144.**

The second terminal according to any one of claims 109 to 143, wherein the processing unit is further configured to perform a listen-before-talk (LBT) procedure within the acquired COT.

**145.**

The second terminal according to claim 144, wherein the processing unit is further configured to perform the LBT procedure within the acquired COT in a case where a channel access priority class (CAPC) of the second terminal is higher than or equal to a CAPC shared by the COT.

**146.**

The second terminal according to claim 144 or 145, wherein the processing unit is further configured to transmit at least one of a physical sidelink control channel (PSCCH), a physical sidelink shared channel (PSSCH), a physical sidelink feedback channel (PSFCH), or a synchronization signals and physical broadcast channel block (SSB) upon accessing a channel via the LBT procedure.

**147.**

A communication device, comprising: a processor and a memory, wherein the memory is configured to store one or more computer programs, and the processor is configured to call and run the one or more computer programs in the memory to cause the communication device to perform the method as defined in any one of claims 1 to 73.

**148.**

A chip, comprising: a processor, wherein the processor is configured to call and run one or more computer programs in a memory to cause a device equipped with the chip to perform the method as defined in any one of claims 1 to 73.

**149.**

A computer-readable storage medium, storing: one or more computer programs, wherein the one or more computer programs, when loaded and run on a device, cause the device to perform the method as defined in any one of claims 1 to 73.

**150.**

A computer program product, comprising: one or more computer program instructions, wherein the one or more computer program instructions, when loaded and executed on a computer, cause the computer to perform the method as defined in any one of claims 1 to 73.

**151.**

A computer program, wherein the computer program, when loaded and run on a computer, causes the computer to perform the method as defined in any one of claims 1 to 73.

100

110

120    120

FIG. 1

Start

No

Failure of access to channel
of communication device

Is idle within Td?

Yes

S210: Setting N=Ninit

Success of access to channel
of communication device

Yes

S240: N=0?

No

S220: N=N-1

Yes

S230: Is monitoring result
within Tsl idle?

No

No

S250: Is monitoring result
within Td idle?

Yes

FIG. 2

COT acquired by STA

Slot ≤16μs    Slot ≥25μs

Downlink transmission opportunity

Uplink transmission opportunity

Downlink transmission opportunity

Successful type-1 channel access

Type-2C channel access

Type-2A channel access

Slot =16μs

Downlink transmission opportunity

Uplink transmission opportunity

Successful type-1 channel access

Type-2B channel access

Slot =25μs

Downlink transmission opportunity

Uplink transmission opportunity

Successful type-1 channel access

Type-2A channel access

FIG. 3

RB

Reference of a common RB

RB set 1    Start of guard band 1    RB set 2    Start of guard band 2    RB set 3

Start of carrier bandwidth    Length of guard band 1    Length of guard band 2    End of carrier bandwidth

Start of BWP    End of BWP

FIG. 4

eNB

Grant

DL
SL

FIG. 5A

eNB

SL

FIG. 5B

On Duration | Opportunity for DRX

UE shall
monitor PDCCH

DRX Cycle

FIG. 6

Power-saving signal
instructing that PDCCH
being monitored

Power-saving signal
instructing that PDCCH
being not monitored

Power-saving signal
instructing that PDCCH
being not monitored

Power-saving signal
instructing that PDCCH
being monitored

0   1   2   3

DRX Cycle

FIG. 7

800

S810

Transmitting, by a first terminal, first information upon accessing a channel via an LBT procedure, wherein the first information is used to indicate COT sharing information

FIG. 8

900

S910

Receiving, by a second terminal, first information, wherein the first information is used to indicate COT information

S920

Performing, by the second terminal, channel access based on the COT information acquired from the first information

FIG. 9

1000

S1010

Performing, by a second terminal, an LBT procedure within an acquired COT

S1020

Transmitting, by the second terminal, at least one of a PSCCH, a PSSCH, a PSFCH, or an SSB upon accessing a channel via the LBT procedure, that is, upon a successful LBT procedure

FIG. 10

FIG. 11

FIG. 12

FIG. 13

Communication device 1400

Memory 1420

Processor 1410

Transceiver 1430

FIG. 14

Chip 1500

Input interface 1530

Processor 1510

Memory 1520

Output interface 1540

FIG. 15

Communication system 1600

First terminal

1610

Second terminal

1620

FIG. 16

## INTERNATIONAL SEARCH REPORT

| | International application No. |
|---|---|
| | **PCT/CN2023/104306** |

| A. | CLASSIFICATION OF SUBJECT MATTER |
|---|---|

H04W72/40(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

VCN: DWPI; ENTXT; 3GPP: 非授权, 先听后说, 信道占用时间, 信道, 接入, 优先级, 类别, 侧行, 侧链路, 边链路, 副链路, 共享, LBT, COT, channel, access, priority, class, CAPC, sidelink, shar+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115915409 A (SPREADTRUM COMMUNICATIONS (SHANGHAI) CO., LTD.) 04 April 2023 (2023-04-04)<br>description, paragraphs 52 and 65-131, and figures 2 and 6-8 | 1-151 |
| X | CN 115996390 A (QUECTEL WIRELESS SOLUTIONS CO., LTD.) 21 April 2023 (2023-04-21)<br>description, paragraphs 74-139, and figures 4-6 | 1-151 |
| X | CN 115884427 A (ZTE CORP.) 31 March 2023 (2023-03-31)<br>description, paragraphs 36-64, and figures 1-2 | 1-151 |
| X | US 2021092783 A1 (QUALCOMM INC.) 25 March 2021 (2021-03-25)<br>description, paragraphs 130-144, and figures 11-12 | 1-151 |
| A | APPLE. "Considerations on NR V2X Mode 2 Resource allocation mechanism"<br>*3GPP TSG RAN WG1 #97, R1-1907335,* 17 May 2019 (2019-05-17),<br>entire document | 1-151 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 December 2023** | **14 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/104306**

| Patent document cited in search report | | | Publication date (day/month/year) | Patent family member(s) | | | Publication date (day/month/year) |
|---|---|---|---|---|---|---|---|
| CN | 115915409 | A | 04 April 2023 | None | | | |
| CN | 115996390 | A | 21 April 2023 | None | | | |
| CN | 115884427 | A | 31 March 2023 | None | | | |
| US | 2021092783 | A1 | 25 March 2021 | EP | 4035468 | A1 | 03 August 2022 |
| | | | | WO | 2021061880 | A1 | 01 April 2021 |
| | | | | CN | 114424640 | A | 29 April 2022 |
| | | | | IN | 202227009579 | A | 08 July 2022 |

Form PCT/ISA/210 (patent family annex) (July 2022)